(19) Europäisches Patentamt
European Patent Office
Office européen des brevets

(11) EP 1 242 467 B1

(12) **FASCICULE DE BREVET EUROPEEN**

(45) Date de publication et mention de la délivrance du brevet:
**11.08.2004 Bulletin 2004/33**

(21) Numéro de dépôt: **00990045.7**

(22) Date de dépôt: **08.12.2000**

(51) Int Cl.[7]: **C08F 2/38**, C08F 293/00, C07F 9/40

(86) Numéro de dépôt international:
**PCT/FR2000/003458**

(87) Numéro de publication internationale:
**WO 2001/042312 (14.06.2001 Gazette 2001/24)**

(54) **PROCEDE DE SYNTHESE DE POLYMERES PAR POLYMERISATION RADICALAIRE CONTROLEE A L'AIDE DE XANTHATES**

VERFAHREN ZUR HERSTELLUNG VON POLYMEREN DURCH EINE KONTROLLIERTE RADIKALISCHPOLYMERISATION MIT XANTHATEN

SYNTHESIS METHOD FOR POLYMERS BY CONTROLLED RADICAL POLYMERISATION WITH XANTHATES

(84) Etats contractants désignés:
**AT BE CH CY DE DK ES FI FR GB GR IE IT LI LU MC NL PT SE TR**

(30) Priorité: **09.12.1999 FR 9915555**

(43) Date de publication de la demande:
**25.09.2002 Bulletin 2002/39**

(73) Titulaire: **RHODIA CHIMIE**
**92512 Boulogne Billancourt Cedex (FR)**

(72) Inventeurs:
- **DESTARAC, Mathias**
  **F-75013 Paris (FR)**
- **CHARMOT, Dominique**
  **Los Gatos, CA 95032 (US)**
- **ZARD, Samir**
  **F-91190 Gif sur Yvette (FR)**
- **GAUTHIER-GILLAIZEAU, Isabelle**
  **F-44470 Carquefou (FR)**

(74) Mandataire: **Colombet, Alain André et al**
**Cabinet Lavoix,**
**2, Place d'Estienne d'Orves**
**75441 Paris Cedex 09 (FR)**

(56) Documents cités:
**WO-A-00/75207**
**WO-A-98/01478**
**FR-A- 2 764 892**
**US-A- 3 901 932**

- **BURKE, TERRENCE R., JR. ET AL: "Preparation of fluoro- and hydroxy-4-(phosphonomethyl)-D,L-phenylalanine suitably protected for solid-phase synthesis of peptides containing hydrolytically stable analogs of O-phosphotyrosine" , J. ORG. CHEM. (1993), 58(6), 1336-40 XP002141808 See fig. 8b p.1337**
- **BURKE, TERRENCE R., JR. ET AL: "Phosphonate - containing inhibitors of tyrosine-specific protein kinases" , J. MED. CHEM. (1991), 34(5), 1577-81 XP002141809 See fig. 8 p.1577**
- **DATABASE CHEMABS [en ligne] CHEMICAL ABSTRACTS SERVICE, COLUMBUS, OHIO, US; TADA, FUSAO ET AL: "Phosphonate esters for gear oil additives" retrieved from STN Database accession no. 84:92587 XP002141811 & JP 50 111106 A (SAKAI CHEMICAL INDUSTRY CO., LTD., JAPAN) 1 septembre 1975 (1975-09-01)**
- **ANDERSON, GLEN T. ET AL: "Catalytic Antibodies in Synthesis: Design and Synthesis of a Hapten for Application to the Preparation of a Scalemic Pyrrolidine Ring Synthon for Ptilomycalin A" , J. ORG. CHEM. (1996), 61(1), 125-32 XP002141810 See fig. 33 & 34 p.128**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 242 467 B1

## Description

La présente invention concerne un nouveau procédé de polymérisation radicalaire "contrôlée" ou "vivante" donnant accès à des polymères, notamment des copolymères séquences.

Les polymères séquencés (polymères à blocs) sont habituellement préparés par polymérisation ionique. Ce type de polymérisation présente l'inconvénient de ne permettre la polymérisation que de certains types de monomères apolaires, notamment le styrène et le butadiène, et de requérir un milieu réactionnel particulièrement pur et des températures souvent inférieures à l'ambiante de manière à minimiser les réactions parasites, d'où des contraintes de mise en oeuvre sévères.

La polymérisation radicalaire présente l'avantage d'être mise en oeuvre facilement sans que des conditions de pureté excessives soient respectées et à des températures égales ou supérieures à l'ambiante. Cependant, jusqu'à récemment, il n'existait pas de procédé de polymérisation radicalaire permettant d'obtenir des polymères séquences.

Depuis, un nouveau procédé de polymérisation radicalaire s'est développé : il s'agit de la polymérisation radicalaire dite "contrôlée" ou "vivante". La polymérisation radicalaire procède par croissance par propagation de macroradicaux. Ces macroradicaux, dotés d'un temps de vie très faible, se recombinent de façon irréversible par couplage ou dismutation. Lorsque la polymérisation se déroule en présence de plusieurs comonomères, la variation de composition du mélange est infiniment faible devant le temps de vie du macroradical de sorte que les chaînes présentent un enchaînement des unités monomères statistique et non un enchaînement séquence.

Récemment des techniques de polymérisation radicalaire contrôlée ont été mises au point, dans lesquelles les extrémités de chaînes de polymères peuvent être réactivées sous forme de radical par scission homolytique de liaison (par exemple C-O, ou C-Halogène).

La polymérisation radicalaire contrôlée présente donc les aspects distinctifs suivants :

1. le nombre de chaînes est fixe pendant toute la durée de la réaction,
2. les chaînes croissent toutes à la même vitesse, ce qui se traduit par :
   - une augmentation linéaire des masses moléculaires avec la conversion,
   - une distribution des masses resserrée,
3. la masse moléculaire moyenne est contrôlée par le rapport molaire monomère / précurseur de chaîne,
4. la possibilité de préparer des copolymères séquences.

Le caractère contrôlé est d'autant plus marqué que la vitesse de réactivation des chaînes en radical est très grande devant la vitesse de croissance des chaînes (propagation). Il existe des cas où ce n'est pas toujours vrai (i.e. la vitesse de réactivation des chaînes en radical est supérieure ou égale à la vitesse de propagation) et les conditions 1 et 2 ne sont pas observées, néanmoins, il est toujours possible de préparer des copolymères séquencés.

WO 98/58974 décrit un procédé de polymérisation radicalaire vivante permettant d'accéder à des copolymères séquencés par un procédé sans irradiation UV, par mise en oeuvre de composés xanthates, dont la fonction est :

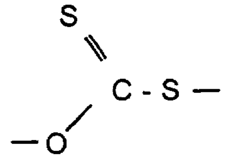

Cette polymérisation radicalaire permet de préparer des polymères séquencés en l'absence de source UV, à l'aide de tous types de monomères. Les polymères obtenus ne contiennent pas d'impuretés métalliques néfastes à leur utilisation. Ils sont fonctionnalisés en bout de chaîne et présentent un indice de polydispersité faible, inférieur à 2, voire à 1,5.

Un but de la présente invention est de proposer un nouveau procédé de polymérisation à l'aide de nouveaux précurseurs de type xanthate.

Un autre but est de proposer un procédé de polymérisation mettant en oeuvre des précurseurs de type xanthate au cours duquel les masses molaires moyennes en nombre $M_n$ des polymères obtenus sont bien contrôlées, c'est-à-dire proches des valeurs théoriques $M_n$ th, et ceci tout au long de la réaction de polymérisation.

Un autre but est de proposer un procédé de polymérisation mettant en oeuvre des précurseurs de type xanthate pour la synthèse d'homopolymères et de copolymères séquencés présentant un indice de polydispersité ($M_w$/

$M_n$) faible, c'est-à-dire proche de 1.

Les travaux des inventeurs ont permis d'aboutir à un procédé de polymérisation radicalaire dans lequel des homopolymères ou des copolymères séquences peuvent être préparés selon un processus présentant un contrôle remarquable et substantiellement plus important que les procédés connus à ce jour.

Ce procédé met en oeuvre des xanthates d'un type particulier qui pour la plupart représentent par eux-mêmes des molécules nouvelles.

L'invention a ainsi pour objet un procédé de préparation de polymères, caractérisé en ce qu'on met en contact :

- au moins un monomère éthyléniquement insaturé,
- au moins une source de radicaux libres, et
- au moins un composé (I) de formule générale (IA), (IB) ou (IC):

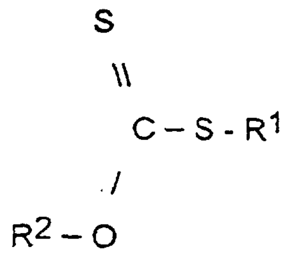

(IA)

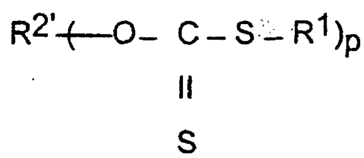

(IB)

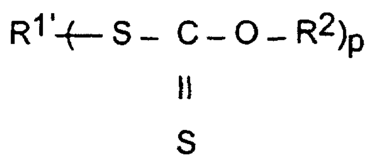

(IC)

dans lesquelles :

- $R^2$ et $R^{2'}$ identiques ou différents représentent un groupe de formule :

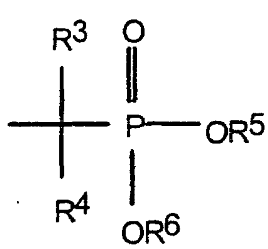

dans laquelle :

- $R^3$ et $R^4$ identiques ou différents sont choisis parmi un groupe halogène, $-NO_2$, $-SO_3R$, -NCO, CN, R, -OR, -SR,

$-NR_2$, -COOR, $O_2CR$, $-CONR_2$, $-NCOR_2$, $C_nF_{2n+1}$ avec n compris entre 1 et 20, de préférence égal à 1 dans lesquels les groupes R identiques ou différents représentent H ou un groupe choisi parmi :

- alkyle,
- alcényle,
- alcynyle,
- cycloalcényle,
- cycloalcynyle,
- aryle, éventuellement condensé à un hétérocycle aromatique ou non,
- alkaryle,
- aralkyle,
- hétéroaryle,

  éventuellement substitués par un ou plusieurs groupes identiques ou différents choisis parmi halogène, =O, =S, OH, alcoxy, SH, thioalcoxy, $NH_2$, mono ou di-alkylamino, CN, COOH, ester, amide, $C_nF_{2n+1}$ (n compris entre 1 et 20), et/ou éventuellement interrompu par un ou plusieurs atomes choisis parmi O, S, N, P,
- ou un groupe hétérocyclique éventuellement substitué par un ou plusieurs groupes tels que définis précédemment

  • ou $R^3$ et $R^4$ forment ensemble avec l'atome de carbone auxquels ils sont attachés un groupe =O ou =S ou un cycle hydrocarboné ou un hétérocycle,
  • $R^5$ et $R^6$ identiques ou différents représentent un groupe tel que défini ci-dessus pour R
  • ou $R^5$ ou $R^6$ forment ensemble une chaîne hydrocarbonée en $C_2$-$C_4$, éventuellement interrompu par un hétéroatome choisi parmi O, S, N et P

- $R^1$ et $R^{1'}$ identiques ou différents représentent un groupe tel que défini ci-dessus par $R^3$ ou $R^4$,
- p représente un nombre entier de 2 à 10.

Selon l'invention, le terme "alkyle" désigne un radical hydrocarboné linéaire ou ramifié de 1 à 20 atomes de carbone, tel que méthyle, éthyle, propyle, isopropyle, butyle, tert-butyle, isobutyle, pentyle, hexyle, heptyle, octyle, nonyle, décyle, undécyle, dodécyle, tridécyle, tétradécyle, pentadécyle, hexadécyle, heptadécyle, octadécyle, nonadécyle ou icosyle.

Par "alcényle", on entend une chaîne hydrocarbonée linéaire ou ramifiée de 2 à 20 atomes de carbone comprenant une ou plusieurs doubles liaisons. Des exemples de groupes alcényle particulièrement préférés sont les groupes alcényle portant une seule double liaison tels que $-CH_2-CH_2-CH=C(CH_3)_2$, vinyle ou allyle.

Par "alcynyle", on entend une chaîne hydrocarbonée linéaire ou ramifiée de 2 à 20 atomes de carbone comprenant une ou plusieurs triples liaisons. Des exemples de groupes alcynyle particulièrement préférés sont les groupes alcynyle portant une seule triple liaison tel que $-CH_2-CH_2-C{\equiv}CH$.

Le terme "cycloalkyle" désigne des groupements hydrocarbonés saturés qui peuvent être mono- ou polycycliques et comprennent de 3 à 12 atomes de carbone, de préférence de 3 à 8. On préfère plus particulièrement les groupements cycloalkyle monocycliques tels que cyclopropyle, cyclobutyle, cyclopentyle, cyclohexyle, cycloheptyle, cyclooctyle, cyclononyle, cyclodécyle, cycloundécyle et cyclododécyle.

Par "cycloalcényle", on entend selon l'invention un groupe dérivé d'un groupe cycloalkyle tel que défini ci-dessus, présentant une ou plusieurs doubles liaisons, de préférence une double liaison.

Par "cycloalcynyle", on entend selon l'invention un groupe dérivé d'un groupe cycloalkyle tel que défini ci-dessus, présentant une ou plusieurs triples liaisons, de préférence une triple liaison.

Le terme "aryle" représente un groupement hydrocarboné mono- ou bicyclique aromatique comprenant 6 à 10 atomes de carbone, tel que phényle ou naphtyle.

Par "alkaryle", on entend un groupe alkyle tel que défini ci-dessus, substitué par un groupe aryle.

Par "aralkyle", on entend un groupe alkyle tel que défini ci-dessus, substitué par un groupe aryle.

Par "alcoxy", on entend un groupe O-alkyle ayant généralement de 1 à 20 atomes de carbone, notamment méthoxy, éthoxy, propoxy et butoxy.

Par "halogène" on entend un atome de fluor, de chlore, de brome ou d'iode.

Lorsque le groupe alkyle est éventuellement halogéné, on préfère qu'il représente perfluoroalkyle et notamment pentafluoroéthyle ou trifluorométhyle.

Le terme "hétéroaryle" désigne des groupes aromatiques monocycliques de 5 à 7 chaînons ou bicycles de 6 à 12 chaînons comprenant un, deux ou trois hétéroatomes endocycliques choisis parmi O, N et S. Des exemples en sont les groupes furyle, thiényle, pyrrolyle, oxazolyle, isoxazolyle, thiazolyle, isothiazolyle, imidazolyle, pyrazolyle, oxadiazolyle, triazolyle, thiadiazolyle, pyridyle, pyridazinyle, pyrazinyle et triazinyle.

Les hétéroaryles préférés comprennent de 4 à 5 atomes de carbone et de 1 à 2 hétéroatomes.

Le terme groupe hétérocyclique désigne des cycles carbonés saturés ou de préférence insaturés monocycliques ou bicycliques ayant de 5 à 12 chaînons et présentant 1, 2 ou 3 hétéroatomes endocycliques choisis parmi O, N et S. Ce sont généralement des dérivés des groupes hétéroaryles décrits ci-dessus. De préférence, l'hétérocycle lorsqu'il est insaturé comprend une seule double liaison. Des exemples préférés d'hétérocycles insaturés sont dihydrofuryle, dihydrothiényle, dihydropyrrolyle, pyrrolinyle, oxazolinyle, thiazolinyle, imidazolinyle, pyrazolinyle, isoxazolinyle, isothiazolinyle, oxadiazolinyle, pyranyle et les dérivés mono- insaturés de la pipéridine, du dioxane, de la pipérazine, du trithiane, de la morpholine, du dithiane, de la thiomorpholine, ainsi que tétrahydropyridazinyle, tétrahydropyrimidinyle, et tétrahydrotriazinyle.

Lorsque l'un des groupes ci-dessus représente un groupe aryle éventuellement condensé à un héterocycle insaturé, l'hétérocyle insaturé présente de 5 à 7 chaînons et préférablement une seule insaturation en commun avec le groupe aryle.

Le procédé selon l'invention consiste donc à mettre en contact une source de radicaux libres, un monomère éthyléniquement insaturé et un composé (I) de formule (IA), (IB) ou (IC).

Ce composé (I) porte une fonction xanthate. Selon la caractéristique essentielle de l'invention, la fonction xanthate porte un groupe $R^2$ ou $R^{2'}$, qui est substitué par un groupe $P(O)(OR^5)(OR^5)$ tel que défini ci-dessus.

Des xanthates répondant à la formule générale (IA) sont connus de l'état de la technique. Ainsi, les deux articles de Burke et al. ("Preparation of fluoro- and hydroxy-4-(phosphonomethyl)-D,L-phenylalanine suitably protected for solid-phase synthesis of peptides containing hydrolytically stable analogs of O-phosphotyrosine", J. Org. Chem. (1993), 58(6), Figure 8b, p. 1337, et "Phosphonate-containing inhibitors of tyrosine-specific protein kinases", J. Med. Chem. (1991), 34(5), Figure 8, p. 1577), décrivent un xanthate de formule (IA) dans lequel $R_1 = CH_3$, $R_3 = H$, et $R_4$ = PH-CH($OEt_2$).

Par ailleurs, le brevet US 3,901,932 décrit quant à lui un xanthate de formule (1) dans lequel $R_1$, $R_2$ et $R_3$ représentent des groupements hydrocarbonés.

L'article de Anderson et al. ("Catalytic Antibodies in Synthesis: Design and Synthesis of a Hapten for Application to the Préparation of a Scalemic Pyrrolidine Ring Synthon for Ptilomycalin A", J. Org. Chem. (1996), 61(1), 125-32) décrit un xanthate de formule (IA) dans lequel $R_1 = CH_3$, $R_3$ = H et $R_4$ désigne un hétérocycle substitué par un groupement protecteur.

Néanmoins, ces différents documents ne suggèrent pas que les xanthates en question puissent être utilisés dans le procédé de la présente invention.

Avantageusement, le groupe $R^3$ est un groupe électroattracteur.

Selon une variante préférée, $R^2$ représente un groupe tel que défini précédemment, et $R^3$ représente un groupe alkyle substitué par au moins un atome de fluor, de chlore et/ou de brome. Les groupes $R^3$ préférés sont les suivants :

- $CF_3$,
- $CF_2CF_2CF_3$,
- $C_6F_{13}$,

Selon une autre variante préférée, $R^3$ représente un groupe CN ou $NO_2$.

Avantageusement, $R^4$ représente un atome d'hydrogène. Les groupes $R^5$ et $R^6$ représentent de préférence un groupe alkyle, linéaire, ramifié ou cyclique avantageusement en $C_1$-$C_{20}$.

On peut citer notamment les groupes méthyle, éthyle, isopropyle, propyle, butyle, isobutyle, tert-butyle, pentyle, n-pentyle, hexyle, cyclohexyle, heptyle, éthylhéxyle, octyle, nonyle, décyle, undécyle, docyle, tridécyle, tétradécyle, hexadécyle, octadécyle.

Ces groupes peuvent être présents sous les différentes formes isomères possibles.

$R_5$ et $R_6$ peuvent également représenter un groupe alkyle substitué comportant un ou plusieurs substituants identiques ou différents. On peut citer notamment les groupes substituants acyles tels que acétyle ; alkoxy tels que méthoxy, butoxy, phényloxy, cyclohexyloxy ; halogeno, notamment chloro et fluoro ; hydroxy ; aryle, tels que phényle et naphtalényle ; aralkyle ; alcényle, notamment héxènyle, cyclohéxènyle et propènyle.

Un sous-groupe particulièrement avantageux est constitué par les groupes alkyle substitués par un ou plusieurs atomes d'halogène, de préférence de fluor, le groupement $C_nF_{(2n+1)}$-$CH_2$ (n étant tel que défini précédemment) étant particulièrement préféré.

$R_5$ et $R_6$ peuvent également former ensemble un groupe cyclique comprenant un atome de phosphore, par exemple un groupe

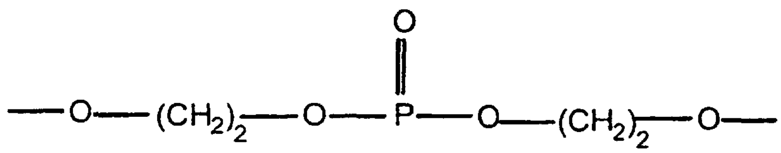

Les résultats les plus intéressants ont été obtenus pour les composé (I) lorsque $R^1$ est un groupe choisi parmi :

- $CH(CH_3)(CO_2Et)$
- $CH(CH_3)(C_6H_5)$
- $CH(CO_2Et)_2$
- $C(CH_3)(CO_2Et)(S-C_6H_5)$
- $C(CH_3)_2(C_6H_5)$, et

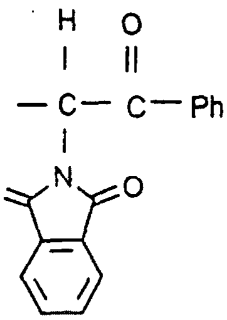

dans lesquelles Et représente un groupe éthyle et Ph représente un groupe phényle.

Les groupes $R^1$ et $R^{1'}$ peuvent également représenter une chaîne polymère issue d'une polymérisation radicalaire ou ionique ou issue d'une polycondensation. Pour les composés de formule (IC), on préfère ceux pour lesquels $R^{1'}$ est le groupe - $CH_2$ - phényl - $CH_2$ - ou le groupe $-CHCH_3CO_2CH_2CH_2CO_2CHCH_3-$.

$R^2$ est de préférence un groupe :

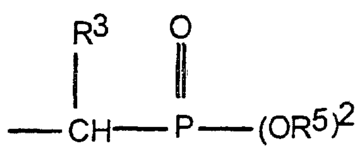

avec $R^3$ étant $CF_3$, $CF_2CF_2CF_3$, $C_6F_{13}$ ou CN et $R^5$ étant un groupe alkyle en $C_1$-$C_4$, de préférence éthyle.

Selon le mode préféré de l'invention, le procédé de polymérisation met en oeuvre un composé (I) de formule (IA). Les composés de formule (IA) préférés sont les suivants.

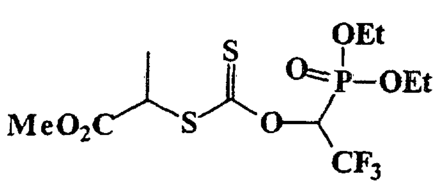

(IAa)

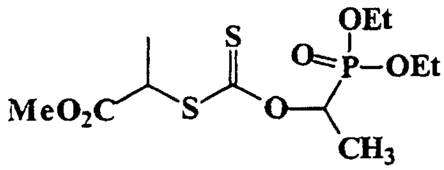

(IAb)

Les composés de formule (IA) peuvent notamment être obtenus par:

a) réaction d'un composé carbonyle de formule générale II :

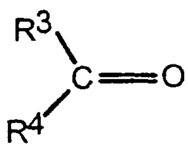

(II)

$R^3$ et $R^4$ étant tels que définis ci-dessus, avec un phosphite de formule générale III :

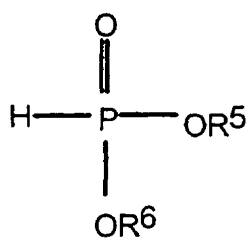

(III)

$R^5$ et $R^6$ étant tels que définis ci-dessus,
pour former un composé de formule générale IV :

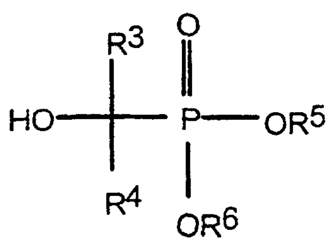

(IV)

$R^3$, $R^4$, $R^5$ et $R^6$ étant tels que définis ci-dessus,

b) réaction du composé de formule IV avec du disulfure de carbone $CS_2$ en présence d'un alcoolate de métal $M^+OR'^-$ pour conduire à un xanthate de formule V :

$$R^2O\ (C{=}S\text{-}S^-,\ M^+ \qquad (V)$$

dans laquelle $R^2$ est tel que défini précédemment et M représente un cation, notamment de métal alcalin ;

c) réaction du composé de formule V avec un composé de formule VI :

$$R^1X \quad (VI)$$

dans laquelle $R^1$ est tel que défini ci-dessus et X représente un atome d'halogène, pour conduire au composé de formule (IA) tel que défini ci-dessus.

Les composés de formule générale IB sont obtenus de la même manière à partir de composés polyhydroxylés correspondant à l'alcool de formule générale IV.

Les composés de formule générale IC sont obtenus de la même manière à partir de l'analogue polyhalogéné de l'halogénure d'alkyle de formule générale VI.

Les composés de formule générale II sont disponibles dans le commerce ou peuvent être aisément préparés par l'homme du métier, à l'aide de procédures classiques.

Les phosphites de formule générale III peuvent ainsi être préparés par réaction entre un alcool et $PCl_3$, de manière connue de l'homme du métier. Lorsque les groupes $R_5$ et/ou $R_6$ ont un nombre de carbone élevée, on préfère tout d'abord préparer des phosphites de bas poids moléculaire, par exemple un diéthylphosphite puis par une voie de transestérification remplacer les groupes éthoxy par des groupes alkoxy de poids moléculaire supérieur.

Dans le cas des phosphites aromatiques, on préfère préparer tout d'abord le triphénylphosphite et le faire réagir avec de l'acide phosphoreux pour obtenir le diphénylphosphite.

On peut aussi préparer les phosphites suivants :

diméthyl phosphite
diéthyl phosphite
dipropyl phosphite
dibutyl phosphite
dipentyl phosphite
dihexyl phosphite
diheptyl phosphite
dioctyl phosphite
dinonyl phosphite
didécyl phosphite
diundécyl phosphite
didocyl phosphite
ditridécyl phosphite
ditetradécyl phosphite
dihexadécyl phosphite
dioctadécyl phosphite
bis[2-(acétyloxy)éthyl] phosphite
bis(4-butoxybutyl) phosphite
bis[2-(cyclohexyloxy)méthyléthyl) phosphite
bis(méthoxyméthyl) phosphite
bis[2-chloro-1-(chlorométhyl)éthyl] phosphite
bis(2-chloroéthyl) phosphite
bis(2-chloropropyl) phosphite
bis(2,3-dihydroxypropyl) phosphite
bis(2-hydroxyéthyl) phosphite
bis(2,2,3,3,4,4,5,5,6,6,7,7-dodeca fluoroheptyl) phosphite
bis(2-fluoroéthyl) phosphite
bis(2,2,3,3,4,4,5,5-octafluoropentyl) phosphite
bis(2,2,3,3-tétrafluoropropyl) phosphite
bis(2,2,2-trifluoroéthyl) phosphite
2,2,3,3,4,4,5,5,6,6,7,7-dodécafluoro heptyl méthyl phosphite
méthyl 2,2,3,3,4,4,5,5-octafluoropentyl phosphite
méthyl 2,2,3,3-tétrafluoropropyl phosphite
diphényl phosphite
bis(4-méthylphényl) phosphite
bis(4-nonylphényl) phosphite

di-1-naphthalényl phosphite
dicyclohexyl phosphite
di-2-cyclohexen-1-yl phosphite
di-2-propényl phosphite
2,7-dioxo(2,7-H)1,3,6,8-tétraoxa-2-7-diphosphacyclodécane

De la même manière qu'indiqué ci-dessus, on peut préparer des phosphites dans lesquels $R_5$ et $R_6$ sont différents à partir des composés d'alcools différents correspondants.

Selon le procédé de l'invention, la source de radicaux libres est généralement un initiateur de polymérisation radicalaire. Cependant, pour certains monomères, tels que le styrène, un amorçage thermique suffit à générer des radicaux libres.

Dans le premier cas, l'initiateur de polymérisation radicalaire peut être choisi être choisi parmi les initiateurs classiquement utilisés en polymérisation radicalaire. Il peut s'agir par exemple d'un des initiateurs suivants:

- les peroxydes d'hydrogène tels que : l'hydroperoxyde de t-butyle tertiaire, l'hydroperoxyde de cumène, le t-butylperoxyacétate, le t-butylperoxybenzoate, le t-butylperoxyoctoate, le t-butylperoxynéodécanoate, le t-butylperoxyisobytarate, le peroxyde de lauroyle, le t-amylperoxypivalate, le t-butylperoxypivalate, le peroxyde de dicumyle, le peroxyde de benzoyle, le persulfate de potassium, le persulfate d'ammonium,
- les composés azoïques tels que : le 2-2'-azo-bis (isobutyronitrile), le 2,2'-azo-bis(2-butyronitrile), le 4,4'-azo-bis (4-acide pentanoïque), le 1,1'-azo-bis(cyclohexane-carbonitrile), le 2-(t-butylazo)-2-cyanopropane, le 2,2'-azo-bis [2-méthyl-N-(1,1)-bis(hydroxyméthyl)-2-hydroxyéthy(] propionamide, le 2,2'-azo-bis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azo-bis (N,N'-diméthylèneisobutyramide), le 2,2'-azo-bis(2-méthyl-N-[1,1-bis (hydroxyméthyl)-2-hydroxyéthyl] propionamide), le 2,2'-azo-bis(2-méthyl-N-[1,1-bis (hydroxyméthyl)éthyl] propionamide), le 2,2'-azo-bis[2-méthyl-N-(2-hydroxyéthyl) propionamide], le 2,2'-azo-bis (isobutyramide) dihydrate,
- les systèmes redox comportant des combinaisons telles que :
  - . les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
  - . les persulfates, perborate ou perchlorate de métaux alcalins ou d'ammonium en association avec un bisulfite de métal alcalin, tel que le métabisulfite de sodium, et des sucres réducteurs,
  - . les persulfate de métal alcalin en association avec un acide arylphosphinique, tel que l'acide benzène phosphonique et similaires, et des sucres réducteurs.

La quantité d'initiateur à utiliser est généralement déterminée de manière à ce que la quantité de radicaux générés soit d'au plus 20 % en mole par rapport à la quantité de composé (II), de préférence d'au plus 5 % en mole.

Selon le procédé de l'invention, les monomères éthyléniquement insaturés sont plus particulièrement choisis parmi le styrène ou ses dérivés, le butadiène, le chloroprène, les esters (méth)acryliques, les esters vinyliques et les nitriles vinyliques.

Par esters (méth)acryliques, on désigne les esters de l'acide acrylique respectivement de l'acide méthacrylique avec les alcools en $C^1$-$C^{12}$ hydrogénés ou fluorés, de préférence $C^1$-$C^8$. Parmi les composés de ce type, on peut citer : l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle.

Les nitriles vinyliques incluent plus particulièrement ceux ayant de 3 à 12 atomes de carbone, comme en particulier l'acrylonitrile et le méthacrylonitrile.

Il est à noter que le styrène peut être remplacé en totalité ou en partie par des dérivés tels que l'alphaméthylstyrène ou le vinyltoluène.

Les autres monomères éthyléniquement insaturés, utilisables seuls ou en mélanges, ou copolymérisables avec les monomères ci-dessus sont notamment :

- les esters vinyliques d'acide carboxylique comme l'acétate de vinyle, le Versatate® de vinyle, le propionate de vinyle,
- les halogénures de vinyle,
- les acides mono- et di- carboxyliques à insaturation éthylénique comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués,

- les amides des acides carboxyliques insaturés comme l'acrylamide, le méthacrylamide, le N-méthylolacrylamide ou méthacrylamide, les N-alkylacrylamides.
- les monomères éthyléniquement insaturés comportant un groupe acide sulfonique et ses sels alcalins ou d'ammonium par exemple l'acide vinylsulfonique, l'acide vinyl-benzène sulfonique, l'acide alpha-acrylamidométhylpropane-sulfonique, le 2-sulfoéthylène-méthacrylate,
- les amides de la vinylamine, notamment le vinylformamide ou le vinylacétamide,
- les monomères éthyléniquement insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou -méthacrylate, le ditertiobutylaminoéthyl-acrylate ou -méthacrylate, le diméthylamino méthyl-acrylamide ou -méthacrylamide. Il est de même possible d'utiliser des monomères zwitterioniques comme par exemple l'acrylate de sulfopropyl (diméthyl)aminopropyle.

Pour la préparation des polyvinylamines, on utilise de préférence à titre de monomères éthyléniquement insaturés les amides de la vinylamine, par exemple le vinylformamide ou le vinylacétamide. Puis, le polymère obtenu est hydrolysé à pH acide ou basique.
Pour la préparation des polyalcoolvinyliques, on utilise de préférence à titre de monomères éthyléniquement insaturés les esters vinyliques d'acide carboxylique, comme par exemple l'acétate de vinyle. Puis, le polymère obtenu est hydrolysé à pH acide ou basique.
Les types et quantités de monomères polymérisables mis en oeuvre selon la présente invention varient en fonction de l'application finale particulière à laquelle est destiné le polymère. Ces variations sont bien connues et peuvent être facilement déterminées par l'homme du métier.
La polymérisation peut être réalisée en masse, en solution ou en émulsion. De préférence, elle est mise en oeuvre en émulsion.
De préférence, le procédé est mis en oeuvre de manière semi-continue.
La température peut varier entre la température ambiante et 150°C selon la nature des monomères utilisés.
En général, au cours dé la polymérisation, la teneur instantanée en polymère par rapport à la quantité instantanée en monomère et polymère est comprise entre 50 et 99 % en poids, de préférence entre 75 et 99 %, encore plus préférentiellement entre 90 et 99 %. Cette teneur est maintenue, de manière connue, par contrôle de la température, de la vitesse d'addition des réactifs et éventuellement de l'initiateur de polymérisation.
Généralement, le procédé est mis en oeuvre en l'absence de source UV.
Le procédé selon l'invention présente l'avantage de permettre le contrôle des masses moléculaires moyenne en nombre $M_n$ des polymères. Ainsi, ces masses $M_n$ sont proches des valeurs théoriques $M_{n\,th}$, $M_{n\,th}$ étant exprimée par la formule suivante :

$$M_{n\,th} = \frac{[M]_0}{[P]_0} \frac{X}{100} M_0$$

dans laquelle :

- $[M]_0$ représente la concentration molaire initiale en monomère ;
- $[P]_0$ représente le concentration initiale en composé précurseur;
- $X$ représente la conversion du monomère exprimée en pourcentage ;
- $M_0$ représente la masse molaire du monomère (g/mol).

Selon la présente invention, le contrôle de Mn est visible en début de polymérisation, et reste présent lors de l'avancement de la réaction.
En outre, le procédé de polymérisation selon la présente invention conduit à des polymères présentant un faible indice de polydispersité (Ip = $M_w/M_n$ avec $M_w$ : masse moléculaire moyenne en poids), proche de 1.
L'invention concerne donc également les compositions susceptibles d'être obtenues par le procédé décrit ci-dessus qui consiste à mettre en contact au moins un monomère éthyléniquement insaturé, au moins une source de radicaux libres et au moins un composé de formule (IA), (IB) ou (IC).
Généralement, ces compositions polymères présentent un indice de polydispersité d'au plus 2, de préférence d'au plus 1,5.
L'invention a également pour objet une composition comprenant majoritairement un polymère de formule générale (IIIa) :

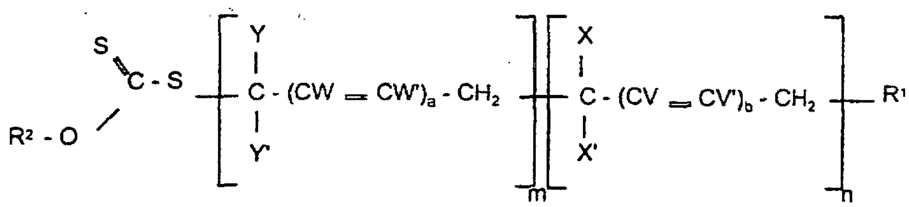
(IIIA)

dans laquelle :

- $R^1$ et $R^2$ sont tels que définis précédemment ;
- V, V', W et W', identiques ou différents, représentent H, un groupe alkyle ou halogène ;
- X, X', Y et Y', identiques ou différents, représentent H, un halogène ou un groupe $R^7$, $OR^7$, $O_2COR^7$, NHCOH, OH, $NH_2$, $NHR^7$, $NR_2$, $R_2N^+O^-$, $NHCOR^7$, $CO_2H$, $CO_2R^7$, CN, $CONH_2$, $CONHR^7$ ou $CONR_2$, dans lesquels $R^7$ est tel que défini précédemment pour R,
- a et b identiques ou différents valent 0 ou 1 ;
- m et n identiques ou différents sont supérieurs ou égaux à 1, et lorsque l'un ou l'autre est supérieur à 1, les motifs unitaires répétitifs sont identiques ou différents.

L'invention a plus particulièrement pour objet une composition comprenant un homopolymère de formule générale (IIIA) telle que définie ci-dessus dans laquelle les motifs unitaires répétitifs sont identiques ou un copolymère séquencé de formule générale (IIIA) telle que définie ci-dessus dans laquelle les motifs unitaires répétitifs sont différents.

Ces polymères séquencés sont issus de la mise en contact :

- d'un monomère éthyléniquement insaturé de formule : CYY' (= CW - CW')$_b$ =$CH^2$,
- d'un polymère précurseur de formule générale (IIA) :

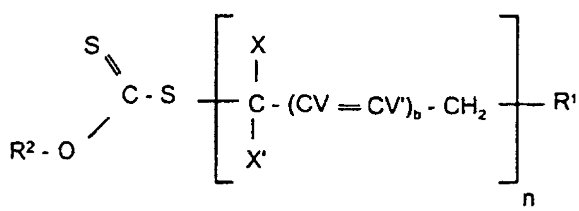
(IIA)

- et d'une source de radicaux libres.

L'invention concerne notamment les polymères séquencés qui présentent au moins deux blocs polymères choisis parmi les associations suivantes :

- polystyrène/polyacrylate de méthyle
- polystyrène/polyacrylate d'éthyle,
- polystyrène/polyacrylate de tertiobutyle,
- polyacrylate d'éthyle/polyacétate de vinyle,
- polyacrylate de butyle/polyacétate de vinyle
- polyacrylate de tertiobutyle/polyacétate de vinyle.

L'invention concerne en outre un procédé de préparation de polymères séquencés multiblocs dans lequel on répète au moins une fois la mise en oeuvre du procédé de polymérisation précédemment décrit en utilisant :

- des monomères différents de la mise en oeuvre précédente, et
- à la place du composé (I) de formule (IA), (IB) ou (IC) le polymère issu de la mise en oeuvre précédente, dit polymère précurseur.

Le procédé complet de synthèse d'un polymère séquencé selon l'invention peut donc consister à :

(1) synthétiser un polymère précurseur par mise en contact d'un monomère éthyléniquement insaturé, d'une source de radicaux libres et d'un composé de formule (IA), (IB) ou (IC),
(2) utiliser le polymère précurseur obtenu à l'étape (1) pour préparer un polymère séquencé dibloc par mise en contact de ce polymère précurseur avec un nouveau monomère éthyléniquement insaturé et une source de radicaux libres.

Cette étape (2) peut être répétée autant de fois que voulu avec de nouveaux monomères pour synthétiser de nouveaux blocs et obtenir ainsi un polymère séquencé multibloc.
Si on répète la mise en oeuvre une autre fois, on obtiendra un polymère séquencé tribloc, si on le répète une deuxième fois, on obtiendra un polymère séquencé "quadribloc", et ainsi de suite. De cette manière, à chaque nouvelle mise en oeuvre, le produit obtenu est un polymère séquencé présentant un bloc polymère supplémentaire.
Pour la préparation de polymères séquencés multiblocs, le procédé consiste à répéter plusieurs fois la mise en oeuvre du procédé précédent sur le polymère séquencé issu de chaque mise en oeuvre précédente avec des monomères différents.
Les composés de formule (IB) et (IC) sont particulièrement intéressants car ils permettent de faire croître une chaîne polymère sur au moins deux sites actifs. Avec ce type de composés, il est possible d'économiser des étapes de polymérisation pour obtenir un copolymère à n blocs. Ainsi, si p vaut 2 dans la formule (IB) ou (IC), le premier bloc est obtenu par polymérisation d'un monomère M1 en présence du composé de formule (IB) ou (IC). Ce premier bloc peut ensuite croître à chacune de ses extrémités par polymérisation avec un deuxième monomère M2, pour former un copolymère tribloc. Ce polymère tribloc peut, lui-même, croître à chacune de ses extrémités par polymérisation avec un troisième monomère M3, pour former un copolymère "pentabloc" en seulement trois étapes. Si p est supérieur à 2, le procédé permet d'obtenir des homopolymères ou des copolymères séquencés dont la structure est "multi-bras" ou hyperbranchée.
Selon ce procédé de préparation de polymères multiblocs, lorsque l'on souhaite obtenir des polymères séquencés homogènes et non à gradient de composition, et si toutes les polymérisations successives sont réalisées dans le même réacteur, il est essentiel que tous les monomères utilisés lors d'une étape aient été consommés avant que la polymérisation de l'étape suivante ne commence, donc avant que les nouveaux monomères ne soient introduits.
Comme pour le procédé de polymérisation de polymères monoblocs, ce procédé de polymérisation de polymères séquencés présente l'avantage de conduire à des polymères séquencés présentant un indice de polydispersité faible. Il permet également de contrôler la masse moléculaire des polymères séquences.
Les exemples suivants illustrent l'invention sans toutefois en limiter la portée.

__Exemple 1 :__

**Préparation du 2-[1-Diéthoxy-phosphoryl)-2,2,2-trifluoroéthoxythiocarbonylsulfanyl)-propionic acid éthyl ester (xanthate IAa)**

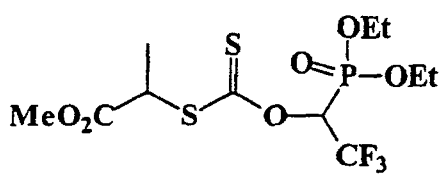

*Synthèse du 2,2,2-trifluoro-1-hydroxy-éthyl-phosphonic acid diethyl ester* (alcool IVa)

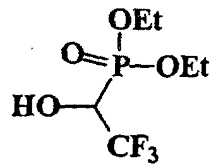

Une solution de fluoral hydrate (10g, solution aqueuse 75%, 64.6 mmol) et de diéthylphosphite $HP(O)(OEt)_2$ (64.6 mmol) dans la triéthylamine (9 mL, 64.6 mmol) est agitée à température ambiante pendant 15 heures. Après évaporation rapide sous pression réduite (température du bain inférieure ou égale à 40°C), le résidu liquide est purifié par flash chromatographie (Petrol/acétone 10 : 1 puis éther pur et éther/méthanol 10:1) pour donner le composé IVa désiré avec un rendement de 82%.

IR (film) 3400, 2992, 2918, 1640, 1268 $cm^{-1}$ ; MS (IC) *m/z* 237 $[MH]^+$; $^1H$ NMR (200 MHz, $CDCl_3$) δ 6.08 (sl, 1H), 4.12-4.38 (m, 5H), 1.33 (t, J=7.1 Hz, 3H).

Synthèse *du 2-[1-Diéthoxy-phosphoryl)-2,2,2-trifluoro-éthoxythio carbonylsulfanyl)-propionic acid éthyl ester* (xanthate **IAa)**

A une suspension de NaH (1.03 g, 60% en dispersion dans l'huile, 25.75 mmol) dans le DMF (30 ml) refroidie à 0°C, est ajoutée goutte à goutte une solution de 5g (21.18 mmol) d'alcool IVa dans le DMF (6 ml). Après 30 minutes à 0°C, 2.65 ml (44 mmol) de $CS_2$ sont ajoutés et l'agitation est maintenue 15 minutes puis 3.51 ml (26.7 mmol) d'éthyl-2-bromopropionate sont ajoutés. Le mélange est laissé à 0°C pendant 23 heures puis est neutralisé par addition d'une solution saturée en $NH_4Cl$, extrait par de l'acétate d'éthyle (3 fois) puis séché sur $MgSO_4$. Après évaporation des solvants et purification par flash chromatographie (silice, Petrol/acétate d'éthyle 9 :1), le xanthate **IAa** est isolé avec un rendement de 21 %.

IR (film) 2982, 2931, 1736, 1450, 1158 $cm^{-1}$ ; MS (IC) m/z $[MH]^+$ ; $^1H$ NMR ( MHz, $CDCl_3$) δ 4.03-4.37 (m, 7H), 1.75 (d, J=6.8 Hz, 3H), 1.20-1.56 (m, 9H) ; $^{13}C$ NMR (50 MHz, $CDCl_3$) δ 198.0, 170.3, 64.8, 64.7, 61.9, 40.2, 28.4, 15.9, 15.8, 13.8.

<u>Exemple 2</u> :

**Préparation du 2-[1-Diéthoxy-phosphoryl)-éthoxythiocarbonyl sulfanyl)-propionic acid éthyl ester (xanthate IAb)**

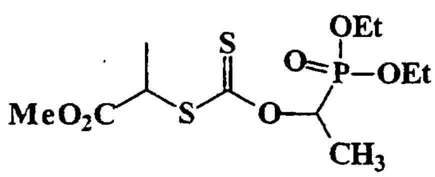

A une suspension de NaH (645 mg, 60% en dispersion dans l'huile) dans le THF (30 ml) refroidie à -78°C, sont ajoutés goutte à goutte 2.07 ml (16.13 mmol) de diéthylphosphite $HP(O)(OEt)_2$. La réaction est agitée à -78°C pendant 40 mns, puis à 0°C pendant 30 minutes. A cette température, 847 µl (15.16 mmol) d'acétaldéhyde sont alors additionnés et le mélange est laissé revenir à température ambiante pendant 2h30mns. 4.8 ml (80.64 mmol) de $CS_2$ sont ensuite additionnés et après 30 mns à 0°C, 2.08 ml (16.02 mmol) d'éthyl 2-bromopropionate sont ajoutés. L'agitation est maintenue encore 30 mns puis la réaction est neutralisée par addition d'une solution saturée de $NH_4Cl$, extraite par l'acétate d'éthyle (3 fois) puis séchée sur $MgSO_4$. Après évaporation des solvants et purication par flash chromatographie (silice, heptane/acétate d'éthyle 2 :8 puis acétate d'éthyle pur), le xanthate **IAb** est isolé avec un rendement de 30%.

IR (film) 2983, 2935, 1736, 1641, 1213, 1040 $cm^{-1}$ ; MS (IC) *m/z* 359 $[MH]^+$ ; $^1H$ NMR (200 MHz, $CDCl_3$) δ 4.11-4.26 (m, 8H), 1.52-1.63 (m, 6H), 1.26-1.39 (m, 9H) ; $^{13}C$ NMR (50 MHz, $CDCl_3$) δ 198.0, 170.9, 74.6, 74.5, 71.9, 71.8, 63.2, 63.1, 63.0, 62.9, 61.8, 47.9, 47.6, 17.1, 16.9, 16.5, 16.4, 14.6, 14.1.

## Exemple 3 :

**Polymérisation de l'acrylate d'éthyle en présence du xanthate IAa (I).**

On introduit dans un tube de Carius :

- $3,6.10^{-3}$ mmol d'azo-bis isobutyronitrile (AIBN) (0.6 mg),
- 10 mmol d'acrylate d'éthyle (1 g)
- 0,12 mmol de xanthate IAa (51,5 mg)
- 1.08 $cm^3$ de toluène.

Le tube est connecté à une rampe à vide, plongé dans l'azote liquide, puis on effectue trois cycles "congélation / vide / retour à l'ambiante" sur le contenu du tube afin de le dégazer. Il est ensuite scellé sous vide. Après retour à l'ambiante, ils est immergé dans un bain d'huile préchauffé à 80°C. Le tube est sorti du bain d'huile après 8 heures et plongé dans l'azote liquide pour stopper la polymérisation et être analysé. Le polymère est récupéré par ouverture du tube puis évaporation des traces de monomère résiduel.

On contrôle:

- la conversion en monomère par gravimétrie.
- la conversion en xanthate (par GPC, détection UV)
- $M_n$ et $M_w/M_n$ par GPC

La conversion en monomère est de 88.4 %.

La conversion en xanthate est de 100 %.

$M_n$ vaut 7300 g/mol.

$M_w/M_n$vaut 1,18.

A titre comparatif, une réaction effectuée dans les mêmes conditions de température et de concentration initiales, le xanthate de l'art antérieur (a-(O-éthylxanthyl)propionate d'éthyle) (ou O-Ethyl S-(1-methoxycarbonylethyl) dithiocarbonate) conduit à un polymère présentent un indice de polydispersité proche de 1,80.

## Exemple 4 :

**Polymérisation du styrène en présence du xanthate IAa (II).**

On introduit dans un tube de Carius :

- 14,4 mmol de styrène (1,5 g)
- 0,18 mmol de xanthate **IAa** (74,2 mg)

Selon le même protocole expérimental que celui décrit dans l'exemple précédent, la réaction est menée à 110°C et est stoppée cette fois-ci au bout de 48 heures et le polymère est analysé.

La conversion en monomère est de 74,4 %.

La conversion en xanthate est de 100 %.

$M_n$ vaut 6500 g/mol.

$M_w/M_n$ vaut 1,14.

A titre comparatif, une réaction effectuée dans les mêmes conditions de température et de concentration initiales, le xanthate de l'art antérieur (a-(O-éthylxanthyl)propionate d'éthyle) (ou O-Ethyl S-(1-methoxycarbonylethyl) dithiocarbonate) conduit à un polymère présentent un indice de polydispersité proche de 2.

## Exemple 5 :

**Polymérisation de l'acétate de vinyle en présence du xanthate IAa (III)**.

On introduit dans un tube de Carius :

- 17,4 mmol d'acétate de vinyle (1,5 g)
- 0,22 mmol de xanthate **IAa** (89,8 mg)
- 0,013 mmol d'AIBN (2,1 mg)

Selon le même protocole expérimental que celui décrit dans l'exemple précédent, la réaction est réalisée à 80°C, puis stoppée cette fois-ci au bout de 8 heures. Le polymère est ensuite analysé.

La conversion en monomère est de 11.3 %.
La conversion en xanthate est de 100 %.
$M_n$ vaut 1300 g/mol.
$M_w/M_n$ vaut 1,17.

**Exemple 6 :**

**Polymérisation du styrène en présence du xanthate IAa (IV).**

On introduit dans un tube de Carius :

- 43,2 mmol de styrène (4,5 g)
- 0,184 mmol de xanthate **IAa** (76 mg)

Selon le même protocole expérimental que celui décrit dans l'exemple 1, la réaction est menée à 110°C et est stoppée cette fois-ci au bout de 48 heures et le polymère est analysé.

La conversion en monomère est de 71,3 %.
La conversion en xanthate est de 100 %.
$M_n$ vaut 16200 g/mol.
$M_w/M_n$ vaut 1,13.

**Exemple 7 :**

**Synthèse d'un copolymère dibloc polystyrène-b-polyacrylate d'éthyle :**

Selon le même protocole expérimental que celui décrit dans l'exemple 1, la réaction est menée à 80°C et est stoppée cette fois-ci au bout de 10 heures et le polymère est analysé.

- 3g de polystyrène **IV**
- 1,85 g (18,5 mmol) d'acrylate d'éthyle
- 3 mg d'AIBN (0,018 mmol)
- 5 ml de toluène

La conversion en monomère est de 87,3 %.
$M_n$ vaut 23700 g/mol.
$M_w/M_n$ vaut 1,17.

**Exemple 8 :**

**Synthèse d'un copolymère dibloc polystyrène-b-polyacrylate de t-butyle :**

Selon le même protocole expérimental que celui décrit dans l'exemple 1, la réaction est menée à 80°C et est stoppée cette fois-ci au bout de 10 heures et le polymère est analysé.

- 1g de polystyrène II
- 2,96 g (23 mmol) d'acrylate de t-butyle
- 2,5 mg d'AIBN (0,015 mmol)
- 5 ml de toluène

La conversion en monomère est de 91 %.
$M_n$ vaut 21100 g/mol.
$M_w/M_n$ vaut 1,19.

**Revendications**

1. Procédé de préparation de polymères, **caractérisé en ce qu'**on met en contact :

- au moins un monomère éthyléniquement insaturé,
- au moins une source de radicaux libres, et
- au moins un composé de formule générale (IA), (IB) ou (IC) :

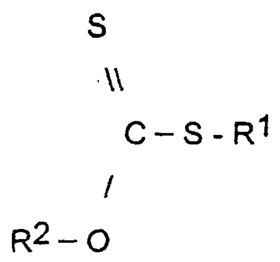

(IA)

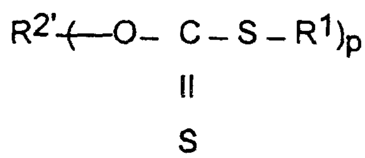

(IB)

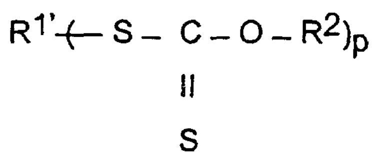

(IC)

dans lesquelles :

- $R^2$ et $R^{2'}$ identiques ou différents représentent un groupe de formule :

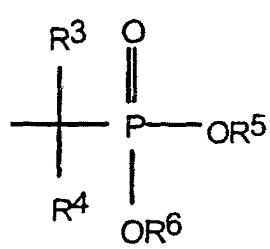

dans laquelle :

$R^3$ et $R^4$ identiques ou différents sont choisis parmi un groupe halogène, $-NO_2$, $-SO_3R$, -NCO, CN, R, -OR, -SR, $-NR_2$, -COOR, $O_2CR$, $-CONR_2$, $-NCOR_2$, $C_nF_{(2n+1)}$ avec n compris entre 1 et 20, de préférence égal à 1

dans lesquels les groupes R identiques ou différents représentent H ou un groupe choisi parmi :

- alkyle,
- alcényle,
- alcynyle,
- cycloalcényle,
- cycloalcynyle,
- aryle, éventuellement condensé à un hétérocycle aromatique ou non,
- alkaryle,
- aralkyle,
- hétéroaryle,
  éventuellement substitués par un ou plusieurs groupes identiques ou différents choisis parmi halogène, =O, =S, OH, alcoxy, SH, thioalcoxy, $NH_2$, mono ou dialkylamino, CN, COOH, ester, amide, $C_nF_{2n+1,}$ et/ou éventuellement interrompu par un ou plusieurs atomes choisis parmi O, S, N, P,
- ou un groupe hétérocyclique éventuellement substitué par un ou plusieurs groupes tels que définis précédemment

  - ou $R^3$ et $R^4$ forment ensemble avec l'atome de carbone auxquels ils sont attachés un groupe =O, =S ou un cycle hydrocarboné ou un hétérocycle,
  - $R^5$ et $R^6$ identiques ou différents représentent un groupe tel que défini ci-dessus pour R
  - ou $R^5$ ou $R^6$ forment ensemble une chaîne hydrocarbonée en $C_2$-$C_4$, éventuellement interrompu par un hétéroatome choisi parmi O, S et N,

- $R^1$ et $R^{1'}$ identiques ou différents représentent un groupe tel que défini ci-dessus par $R^3$ ou $R^4$,
- p représente un nombre entier de 2 à 10.

**2.** Procédé selon la revendication 1, **caractérisé en ce que** $R^3$ représente un groupe électroattracteur.

**3.** Procédé selon l'une quelconque des revendications précédentes, **caractérisé en ce que** $R^3$ représente un groupe alkyle substitué par au moins un atome de fluor, de chlore et/ou de brome, ou un groupe cyano.

**4.** Procédé selon la revendication précédente, **caractérisé en ce que** $R^4$ représente un atome d'hydrogène.

**5.** Procédé selon la revendication 3, **caractérisé en ce** $R^3$ est choisi parmi les groupes suivants :

- $CF_3$,
- $CF_2CF_3$, et
- $C_6F_{13}$.

**6.** Procédé selon l'une quelconque des revendications précédentes, **caractérisé en ce que** $R^1$ est choisi parmi les groupes :

- $CH(CH_3)(CO_2Et)$
- $CH(CH_3)(C_6H_5)$
- $CH(CO_2Et)_2$
- $C(CH_3)(CO_2Et)(S-C_6H_5)$
- $C(CH_3)_2(C_6H_5)$, et

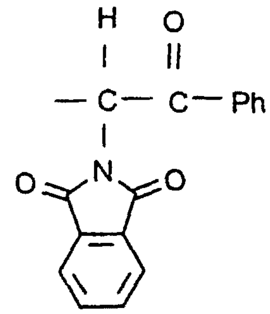

7. Procédé selon l'une quelconque des revendications précédentes, **caractérisé en ce que** la polymérisation met en oeuvre un composé de formule (IA).

8. Procédé selon la revendication précédente, **caractérisé en ce que** le composé de formule (IA) est choisi parmi :

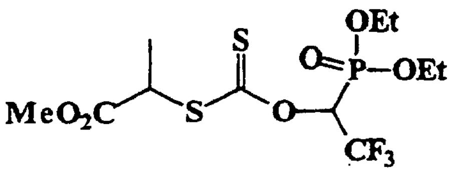

(IAa)

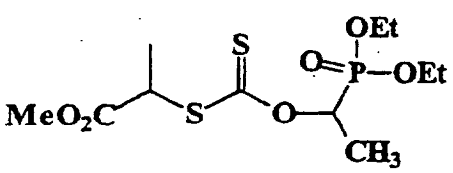

(IAb)

9. Procédé selon l'une quelconque des revendications précédentes, **caractérisé en ce que** le monomère éthyléniquement insaturé est choisi parmi : le styrène ou ses dérivés, le butadiène, le chloroprène, les esters (méth) acryliques et les nitriles vinyliques.

10. Procédé selon l'une quelconque des revendications précédentes, **caractérisé en ce que** le monomère éthyléniquement insaturé est choisi parmi les esters vinyliques d'acide carboxylique tels que l'acétate de vinyle, et le propionate de vinyle.

11. Composition polymère susceptible d'être obtenue par le procédé qui consiste à mettre en contact un monomère éthyléniquement insaturé, une source de radicaux libres et un composé de formule (IA), (IB) ou (IC) tel que défini aux revendications 1 à 6.

12. Composition polymère selon la revendication précédente, **caractérisé en ce qu'**elle présente un indice de polydispersité d'au plus 2, de préférence d'au plus 1,5.

13. Composition comprenant majoritairement un polymère de formule générale (IIIa) :

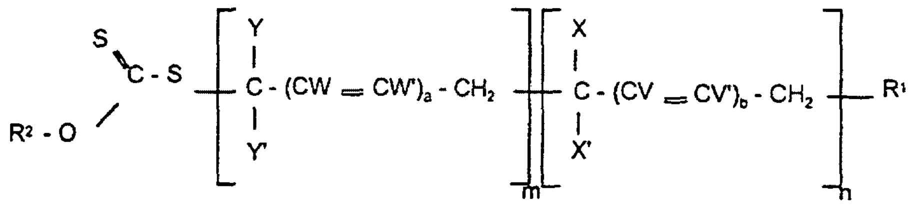 (IIIA)

dans laquelle :

- $R^1$ et $R^2$ sont tels que définis à la revendication 1 ;
- V, V', W et W', identiques ou différents, représentent H, un groupe alkyle ou un halogène ;
- X, X', Y et Y', identiques ou différents représentent H, un halogène ou un groupe $R^7$, $OR^7$, $O_2COR^7$, NHCOH, OH, $NH_2$, $NHR^7$, $NR_2$, $R_2N^+O^-$ , $NHCOR^7$, $CO_2H$, $CO_2R^7$, CN, $CONH_2$, dans lesquels $R^7$ est choisi parmi les groupes R tels que définis à la revendication 1 ;
- a et b identiques ou différents valent 0 ou 1 ;
- m et n identiques ou différents sont supérieurs ou égaux à 1, et lorsque l'un ou l'autre est supérieur à 1, les motifs unitaires répétitifs sont identiques ou différents.

**14.** Composition polymère selon la revendication 13, **caractérisée en ce que** le polymère de formule générale IIIa) est un homopolymère, les motifs unitaires répétitifs étant identiques.

**15.** Composition polymère selon la revendication 13, **caractérisée en ce que** le polymère de formule générale IIIa) est un polymère séquencé, les motifs unitaires répétitifs étant différents.

**16.** Procédé de préparation d'une composition comprenant ur polymère multibloc selon la revendication 15, **caractérisé en ce qu'**on répète au moins une fois la mise en oeuvre du procédé selon l'une des revendications 1 à 10 en utilisant :

- des monomères différents de la mise en oeuvre précédente ; et
- à la place du composé précurseur de formule (IA), (IB) ou (IC), le polymère séquencé issu de la mise en oeuvre précédente.

**17.** Polymère séquencé selon la revendication 15, **caractérisé en ce qu'**il présente au moins deux polymères séquencés choisis parmi les associations suivantes :

- polystyrène/polyacrylate de méthyle,
- polystyrène/polyacrylate d'éthyle,
- polystyrène/polyacrylate de tertiobutyle,
- polyacrylate d'éthyle/polyacétate de vinyle,
- polyacrylate de butyle/polyacétate de vinyle
- polyacrylate de tertiobutyle/polyacétate de vinyle.

**18.** Composés de formules générales la à Ic :

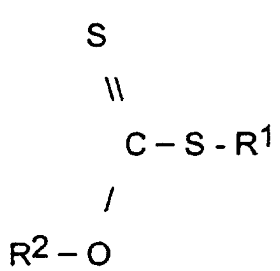 (IA)

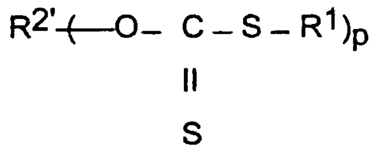

(IB)

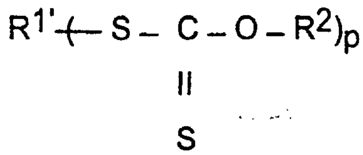

(IC)

dans lesquels:

- $R^2$ et $R^{2'}$ identiques ou différents représentent un groupe de formule :

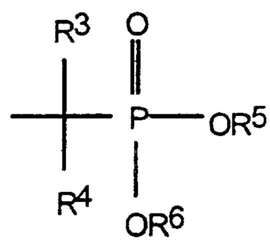

dans laquelle :

- $R^3$ et $R^4$ identiques ou différents représentent un groupe halogène, -NO, $-SO_3R$, -NCO, CN, R, -OR, -SR, $-NR_2$, -COOR, $O_2CR$, $-CONR_2$, $-NCOR_2$, $C_nF_{(2n+1)}$avec n compris entre 1 et 20, de préférence égal à 1

dans lesquels les groupes R identiques ou différents représentent H ou un groupe choisi parmi :

- alkyle,
- alcényle,
- alcynyle,
- cycloalcényle,
- cycloacynyle,
- aryle, éventuellement condensé à un hétérocycle aromatique ou non,
- alkaryle,
- aralkyle,
- hétéroaryle,

éventuellement substitués par un ou plusieurs groupes identiques ou différents choisis parmi halogène, =O, =S, OH, alcoxy, SH, $NH_2$, mono- ou
dialkylamino, CN, COOH, ester, amide, $CF_3$, et/ou éventuellement interrompu par un ou plusieurs atomes choisis parmi O, S, N, P,

- ou un groupe hétérocyclique éventuellement substitué par un ou plusieurs groupes tels que définis précédemment

  - ou $R^3$ et $R^4$ forment ensemble avec l'atome de carbone auxquels ils sont attachés un groupe =O, =S ou

un cycle hydrocarboné ou un hétérocycle,

- $R^5$ et $R^6$ identiques ou différents représentent un groupe tel que défini ci-dessus pour R
- ou $R^5$ ou $R^6$ forment ensemble une chaîne hydrocarbonée en $C_2$-$C_4$, éventuellement interrompu par un hétéroatome choisi parmi O, S et N,

- $R^1$ et $R^{1'}$ identiques ou différents représentent un groupe tel que défini ci-dessus par $R^3$ ou $R^4$,
- p représente un nombre entre de 2 à 10,

sous réserve que lorsque $R_1$ représente un groupe alkyle, et $R_3$ et $R_4$ représentent un groupe R tel que défini ci-dessus, R est nécessairement substitué par un ou plusieurs groupes identiques ou différents choisis parmi halogène, =O, =S, OH, alcoxy, SH, thioalcoxy, $NH_2$, mono ou dialkylamino, CN, COOH, ester, amide, $C_nF_{2n+1}$ , et/ou interrompu par un ou plusieurs atomes choisis parmi O, S, N, P.

**19.** Composés selon la revendication 18, **caractérisés en ce que** $R^3$ représente un groupe électroattracteur.

**20.** Composés selon la revendication 18, **caractérisés en ce que** $R^3$ représente un groupe alkyle substitué par au moins un atome de fluor, de chlore et/ou de brome, ou un groupe cyano.

**21.** Composés selon la revendication 18, **caractérisés en ce que** $R^4$ représente un atome d'hydrogène.

**22.** Composés selon la revendication 18, **caractérisés en ce que** $R^3$ est choisi parmi les groupes suivants :

- $CF_3$,
- $CF_2CF_3$, et
- $C_6F_{13}$.

**23.** Composés selon la revendication 18, **caractérisés en ce que** $R^1$ est choisi parmi les groupes :

- $CH(CH_3)(CO_2Et)$
- $CH(CH_3)(C_6H_5)$
- $CH(CO_2Et)_2$
- $C(CH_3)(CO_2Et)(S\text{-}C_6H_5)$
- $C(CH_3)_2(C_6H_5)$, et

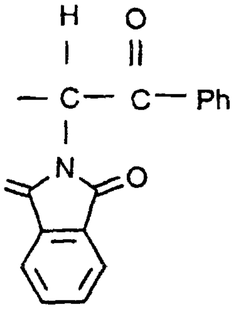

**24.** Composés selon la revendication 18, **caractérisés en ce que** le composé de formule (IA) est choisi parmi :

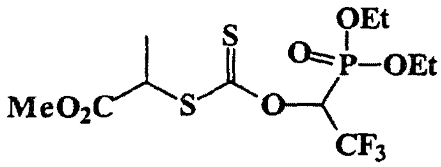

(IAa)

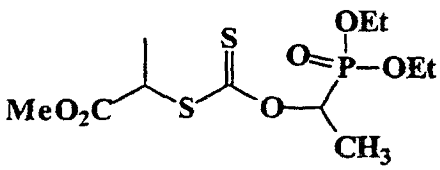

(IAb)

**25.** Utilisation de composés de formules générales IA à IC :

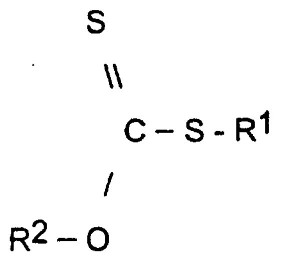

(IA)

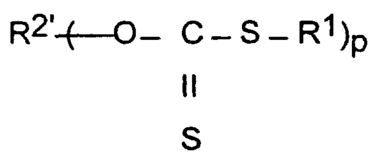

(IB)

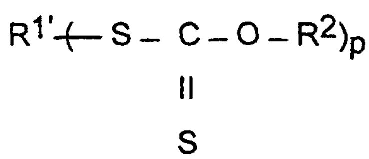

(IC)

dans lesquels:

- $R^2$ et $R^{2'}$ identiques ou différents représentent un groupe de formule :

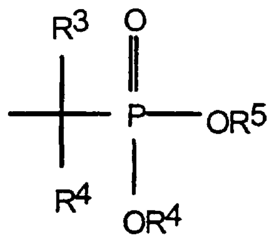

dans laquelle :

$R^3$ et $R^4$ identiques ou différents représentent un groupe halogène, $-NO^2$, $-SO^3R$, -NCO, CN, R, -OR, -SR, $-NR_2$, -COOR, $O_2CR$, $-CONR_2$, $-NCOR_2$, $C_nF_{(2n+1)}$ avec n compris entre 1 et 20, de préférence égal à 1

dans lesquels les groupes R identiques ou différents représentent H ou un groupe choisi parmi :

- alkyle,
- alcényle,
- alcynyle,
- cycloalcényle,
- cycloacynyle,
- aryle, éventuellement condensé à un hétérocycle aromatique ou non,
- alkaryle,
- aralkyle,
- hétéroaryle,

éventuellement substitués par un ou plusieurs groupes identiques ou différents choisis parmi halogène, =O, =S, OH, alcoxy, SH, thioalcoxy, $NH_2$, mono- ou dialkylamino, CN, COOH, ester, amide, $C_nF_{2n+1}$, et/ou éventuellement interrompu par un ou plusieurs atomes choisis parmi O, S, N, P,

- ou un groupe hétérocyclique éventuellement substitué par un ou plusieurs groupes tels que définis précédemment

  - ou $R^3$ et $R^4$ forment ensemble avec l'atome de carbone auxquels ils sont attachés un groupe =O, =S ou un cycle hydrocarboné ou un hétérocycle,
  - $R^5$ et $R^6$ identiques ou différents représentent un groupe tel que défini ci-dessus pour R
  - ou $R^5$ ou $R^6$ forment ensemble une chaîne hydrocarbonée en $C_2$-$C_4$, éventuellement interrompu par un hétéroatome choisi parmi O, S et N,

- $R^1$ et $R^{1'}$ identiques ou différents représentent un groupe tel que défini ci-dessus par $R^3$ ou $R^4$,
- p représente un nombre entier de 2 à 10,

pour la polymérisation radicalaire contrôlée de monomères à insaturation éthylénique.

**26.** Procédé de préparation de composés de formule générale IA selon la revendication 18, **caractérisé en ce qu'**il comprend les étapes suivantes:

a) réaction d'un composé carbonyle de formule générale II :

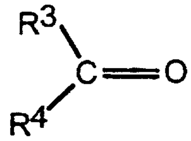

(II)

$R^3$ et $R^4$ étant tels que définis ci-dessus, avec un phosphite de formule générale III :

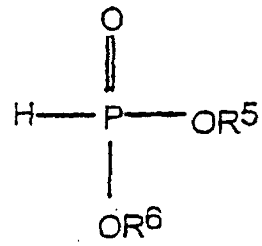

(III)

$R^5$ et $R^6$ étant tels que définis ci-dessus,
pour former un composé de formule générale IV:

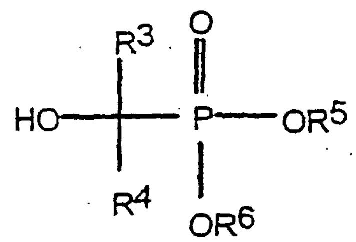

(IV)

$R^3$, $R^4$, $R^5$ et $R^6$ étant tels que définis ci-dessus,

b) réaction du composé de formule IV avec du disulfure de carbone $CS_2$ en présence d'un alcoolate de métal pour conduire à un xanthate de formule V :

$$R^2O\ (C{=}S){-}S^-,\ M^+ \qquad (V)$$

dans laquelle $R^2$ est tel que défini précédemment et $M^+$ représente un cation, notamment de métal alcalin ;

c) réaction du composé de formule V avec un composé de formule VI :

$$R^1X \qquad (VI)$$

dans laquelle $R^1$ est tel que défini ci-dessus et X représente un atome d'halogène, pour conduire au composé de formule (IA) tel que défini à la revendication 18.

**Patentansprüche**

**1.** Verfahren zur Herstellung von Polymeren, **dadurch gekennzeichnet, dass**

- mindestens ein ethylenisch ungesättigtes Monomer,
- mindestens eine Quelle für freie Radikale und
- mindestens eine Verbindung mit der allgemeinen Formel (IA), (IB) oder (IC):

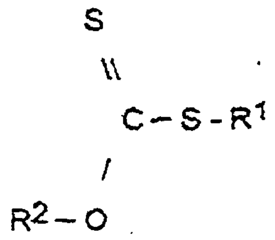

(IA)

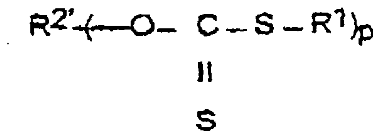

(IB)

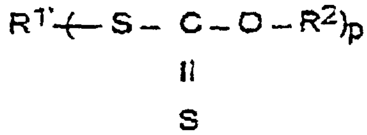

(IC)

in welchen

- $R^2$ und $R^{2'}$ gegebenenfalls voneinander verschieden sind und eine Gruppe mit der Formel

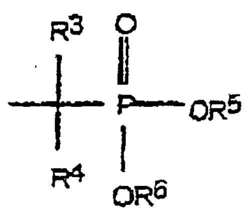

bedeuten, in welcher

$R^3$ und $R^4$ gegebenenfalls voneinander verschieden und aus einem Halogenatom und der $NO_2$-, $-SO_3R$-, -NCO-, CN-, R-, -OR-, -SR-, $-NR_2$-, -COOR-, $O_2CR$-, $-CONR_2$-, $-NCOR_2$und $CnF_{(2n+1)}$-Gruppe, mit n 1 bis 20 und vorzugsweise gleich 1, ausgewählt sind,

in welchen die Gruppen R gegebenenfalls voneinander verschieden sind und H oder eine Gruppe, die ausgewählt ist aus:

- Alkyl,
- Alkenyl,
- Alkinyl,
- Cycloalkenyl,
- Cycloalkinyl,
- Aryl, gegebenenfalls mit einem gegebenenfalls aromatischen Heterocyclus kondensiert,
- Alkaryl,
- Aralkyl und
- Heteroaryl, die gegebenenfalls durch eine oder mehrere gegebenenfalls voneinander verschiedene Gruppen substituiert, die ausgewählt sind aus Halogen, =O, =S, OH, Alkoxy, SH, Thioalkoxy, $NH_2$, Mono- oder Dialkylamino, CN, COOH, Ester, Amid und $C_{nF2n+1}$, und/oder gegebenenfalls durch ein oder mehrere Atome unterbrochen ist, die aus O, S, N und P ausgewählt sind,
- oder eine heterocyclische Gruppe, die gegebenenfalls durch eine oder mehrere Gruppen wie zuvor definiert

substituiert ist, bedeuten, oder

- $R^3$ und $R^4$ zusammen mit dem Kohlenstoffatom, an welches sie gebunden sind, eine =O- und =S-Gruppe oder einen Kohlenwasserstoff- bzw. Heterocyclus bilden,
- $R^5$ und $R^6$ gegebenenfalls voneinander verschieden sind und eine wie weiter oben für R definierte Gruppe bedeuten oder
- $R^5$ oder $R^6$ zusammen eine $C_2$- bis $C_4$-Kohlenwasserstoffkette bilden, die gegebenenfalls durch ein Heteroatom unterbrochen ist, das aus O, S und N ausgewählt ist,

- $R^1$ und $R^{1'}$ gegebenenfalls voneinander verschieden sind und eine wie zuvor für $R^3$ oder $R^4$ definierte Gruppe bedeuten und
- p eine ganze Zahl von 2 bis 10 bedeutet,

miteinander in Berührung gebracht werden.

**2.** Verfahren nach Anspruch 1, **dadurch gekennzeichnet, dass** $R^3$ eine elektrophile Gruppe bedeutet.

**3.** Verfahren nach einem der vorhergehenden Ansprüche, **dadurch gekennzeichnet dass** $R^3$ eine Alkylgruppe bedeutet, die durch mindestens ein Fluor-, Chlorund/oder Bromatom oder eine cyanogruppe substituiert ist.

**4.** Verfahren nach dem vorhergehenden Anspruch, **dadurch gekennzeichnet, dass** $R^4$ ein Wasserstoffatom bedeutet.

**5.** Verfahren nach Anspruch 3, **dadurch gekennzeichnet, dass** $R^3$ aus folgenden Gruppen ausgewählt ist:

- $CF_3$,
- $CF_2CH_3$ und
- $C_6F_{13}$.

**6.** Verfahren nach einem der vorhergehenden Ansprüche, **dadurch gekennzeichnet, dass** $R^1$ ausgewählt ist aus den Gruppen:

- $CH(CH_3)(CO_2Et)$
- $CH(CH_3)(C_6H_5)$
- $CH(CO_2Et)_2$
- $C(CH_3)(CO_2Et)(S\text{-}C_6H_5)$
- $C(CH_3)_2\ (C_6H_5)$und

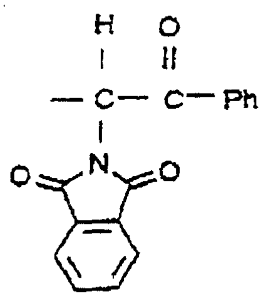

**7.** Verfahren nach einem der vorhergehenden Ansprüche, **dadurch gekennzeichnet, dass** für die Polymerisation eine Verbindung mit der Formel (IA) verwendet wird.

**8.** Verfahren nach dem vorhergehenden Anspruch, **dadurch gekennzeichnet, dass** die Verbindung mit der Formel (IA) ausgewählt ist aus:

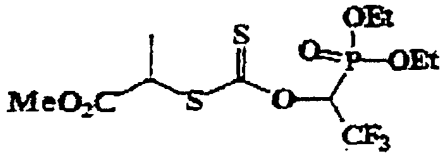

(IAa)

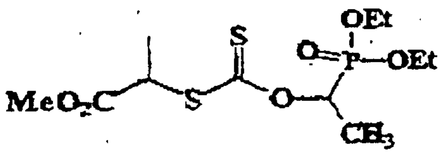

(IAb)

**9.** Verfahren nach einem der vorhergehenden Ansprüche, **dadurch gekennzeichnet, dass** das ethylenisch ungesättigte Monomer aus Styrol bzw. dessen Derivaten, Butadien, Chlorpren, (Meth-)Acrylsäureestern und Vinylnitrilen ausgewählt ist.

**10.** Verfahren nach einem der vorhergehenden Ansprüche, **dadurch gekennzeichnet, dass** das ethylenisch ungesättigte Monomer aus Carbonsäurevinylestern wie Vinylacetat und Vinylpropionat ausgewählt ist.

**11.** Polymerzusammensetzung, die durch das Verfahren erhalten werden kann, das darin besteht, ein ethylenisch ungesättigtes Monomer, eine Quelle für freie Radikale und eine Verbindung mit der Formel (IA), (IB) oder (IC), wie in den Ansprüchen 1 bis 6 definiert, miteinander in Berührung zu bringen.

**12.** Polymerzusammensetzung nach dem vorhergehenden Anspruch, **dadurch gekennzeichnet, dass** ihre Uneinheitlichkeit höchstens 2 und vorzugsweise höchstens 1,5 beträgt.

**13.** Zusammensetzung, die überwiegend ein Polymer mit der allgemeinen Formel (IIIA):

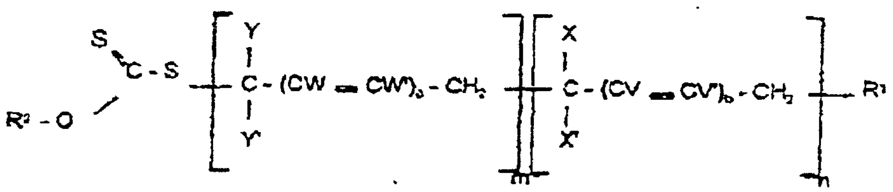

(IIIA)

in welcher

- $R^1$ und $R^2$ wie in Anspruch 1 definiert sind,
- V, V', W und W' gegebenenfalls voneinander verschieden sind und H, eine Alkylgruppe oder ein Halogenatom bedeuten,
- X, X', Y und Y' gegebenenfalls voneinander verschieden sind und H, ein Halogenatom oder eine $R^7$-, $OR^7$-, $O_2COR^7$-, NHCOH-, OH-, $NH_2$-, $NHR^7$-, $NR_2$-, $R_2N^+O^-$-, $NHCOR^7$-, $CO_2H$-, $CO_2R^7$-, CN- und $CONH_2$-Gruppe bedeuten, in welchen $R^7$ aus den Gruppen R wie in Anspruch 1 definiert ausgewählt ist,
- a und b gegebenenfalls voneinander verschieden sind und 0 oder 1 bedeuten und
- m und n gegebenenfalls voneinander verschieden sind und größer als oder gleich 1 sind und, wenn eine davon größer als 1 ist, die Repetiereinheiten gegebenenfalls voneinander verschieden sind, umfasst.

**14.** Polymerzusammensetzung nach Anspruch 13, **dadurch gekennzeichnet, dass** das Polymer mit der allgemeinen Formel (IIIA) ein Homopolymer ist, dessen Repetiereinheiten identisch sind.

**15.** Polymerzusammensetzung nach Anspruch 13, **dadurch gekennzeichnet, dass** das Polymer mit der allgemeinen Formel (IIIA) ein Sequenzpolymer ist, dessen Repetiereinheiten voneinander verschieden sind.

**16.** Verfahren zur Herstellung einer Zusammensetzung, die ein Blockcopolymer nach Anspruch 15 umfasst, **dadurch gekennzeichnet, dass** das Verfahren nach einem der Ansprüche 1 bis 10 mindestens einmal wiederholt wird, wobei

- andere Monomere als für das vorhergehende Verfahren verwendet werden und
- anstelle des Vorläufers mit der Formel (IA), (IB) oder (IC) das Sequenzpolymer, das nach dem vorhergehenden Verfahren erhalten worden ist, verwendet wird.

**17.** Sequenzpolymer nach Anspruch 15, **dadurch gekennzeichnet, dass** es mindestens zwei Polymersequenzen besitzt, die aus folgenden Verknüpfungen ausgewählt sind:

- Polystyrol/Polymethylacrylat,
- Polystyrol/Polyethylacrylat,
- Polystyrol/Poly-tert-butylacrylat,
- Polyethylacrylat/Polyvinylacetat,
- Polybutylacrylat/Polyvinylacetat und
- Poly-tert.-bucylacrylat/Polyvinylacetat.

**18.** Verbindungen mit den allgemeinen Formeln IA bis IC:

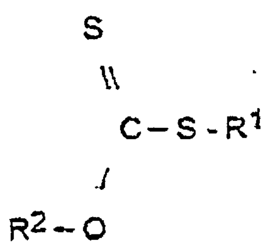

(IA)

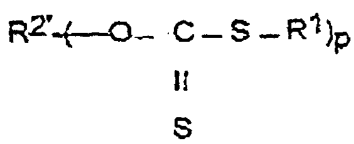

(IB)

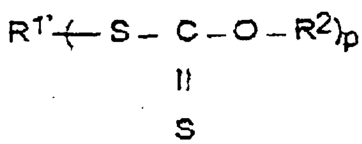

(IC)

in welchen

- $R^2$ und $R^{2'}$ gegebenenfalls voneinander verschieden sind und eine Gruppe mit der Formel

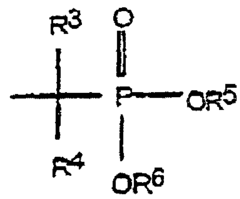

bedeuten, in welcher
$R^3$ und $R^4$ gegebenenfalls voneinander verschieden sind und ein Halogenatom und eine -NO-, $-SO_3R-$, -NCO-, CN-, R-, -OR-, -SR-, $-NR_2-$, -COOR-, $O_2CR-$, $-CONR_2-$, $-NCOR_2$und $C_nF_{(2n+1)}$-Gruppe, mit n 1 bis 20 und vorzugsweise gleich 1, bedeuten, in welchen die Gruppen R gegebenenfalls voneinander verschieden sind und H oder eine Gruppe, die ausgewählt ist aus:

- Alkyl,
- Alkenyl,
- Alkinyl,
- Cycloalkenyl,
- Cycloalkinyl,
- Aryl, gegebenenfalls mit einem gegebenenfalls aromatischen Heterocyclus kondensiert,
- Alkaryl,
- Aralkyl und
- Heteroaryl, die gegebenenfalls durch eine oder mehrere gegebenenfalls voneinander verschiedene Gruppen substituiert, die ausgewählt sind aus Halogen, =O, =S, OH, Alkoxy, SH, $NH_2$, Mono- oder Dialkylamino, CN, COOH, Ester, Amid und $CF_3$, und/oder gegebenenfalls durch ein oder mehrere Atome unterbrochen ist, die aus O, S, N und P ausgewählt sind,
- oder eine heterocyclische Gruppe, die gegebenenfalls durch ein oder mehrere Gruppen wie zuvor definiert substituiert ist, bedeuten, oder

  • $R^3$ und $R^4$ zusammen mit dem Kohlenstoffatom, an welches sie gebunden sind, eine =O- und =S-Gruppe oder einen Kohlenwasserstoff- bzw. Heterocyclus bilden,
  • $R^5$ und $R^6$ gegebenenfalls voneinander verschieden sind und eine wie weiter oben für R definierte Gruppe bedeuten oder
  • $R^5$ oder $R^6$ zusammen eine $C_2$- bis $C_4$-Kohlenwasserstoffkette bilden, die gegebenenfalls durch ein Heteroatom unterbrochen ist, das aus O, S und N ausgewählt ist,

- $R^1$ und $R^{1'}$ gegebenenfalls voneinander verschieden sind und eine wie zuvor für $R^3$ oder $R^4$ definierte Gruppe bedeuten und
- p eine ganze zahl von 2 bis 10 bedeutet,

unter der Voraussetzung, dass, wenn $R_1$ eine Alkylgruppe bedeutet und $R_3$ und $R_4$ eine Gruppe R wie weiter oben definiert bedeuten, R notwendigerweise durch eine oder mehrere gegebenenfalls voneinander verschiedene Gruppen substituiert, die aus Halogen, =O, =S, OH, Alkoxy, SH, Thioalkoxy, $NH_2$, Mono- oder Dialkylamino, CN, COOH, Ester, Amid und $C_nF_{2n+1}$ ausgewählt sind, und/oder durch ein oder mehrere Atome unterbrochen ist, die aus O, S, N und P ausgewählt sind.

**19.** Verbindungen nach Anspruch 18, **dadurch gekennzeichnet, dass** $R^3$ eine elektrophile Gruppe bedeutet.

**20.** Verbindungen nach Anspruch 18, **dadurch gekennzeichnet, dass** $R^3$ eine Alkylgruppe bedeutet, die durch mindestens ein Fluor-, Chlor- und/oder Bromatom oder eine Cyanogruppe substituiert ist.

**21.** Verbindungen nach Anspruch 18, **dadurch gekennzeichnet, dass** $R^4$ ein Wasserstoffatom bedeutet.

**22.** Verbindungen nach Anspruch 18, **dadurch gekennzeichnet, dass** $R^3$ ausgewählt ist aus folgenden Gruppen:

- $CF_3$,
- $CF_2CF_3$ und
- $C_6F_{13}$.

**23.** Verbindungen nach Anspruch 18, **dadurch gekennzeichnet, dass** $R^1$ ausgewählt ist aus den Gruppen :

- $CH\ (CH_3)\ (CO_2Et)$
- $CH\ (CH_3)\ (C_6H_5)$
- $CH(CO_2Et)_2$
- $C(CH_3)(CO_2Et)(S\text{-}C_6H_5)$
- $C(CH_3)_2(C_6H_5)$ und

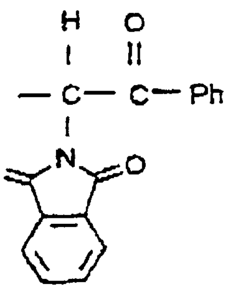

.

**24.** Verbindungen nach Anspruch 18, **dadurch gekennzeichnet, dass** die Verbindung mit der Formel (IA) ausgewählt ist aus:

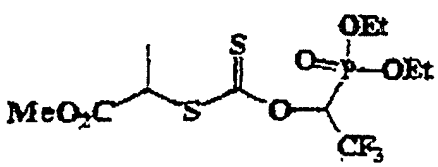

(IAa)

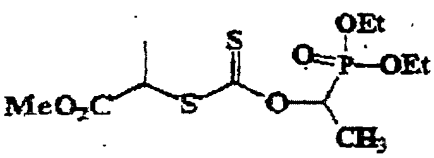

(IAb)

**25.** Verwendung von Verbindungen mit der allgemeinen Formel IA bis IC:

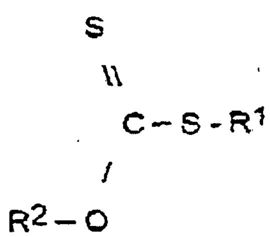

(IA)

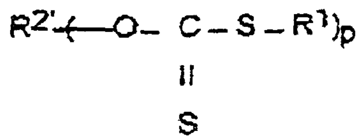

(IB)

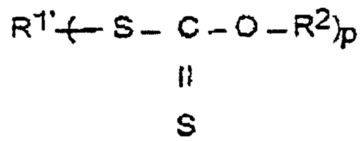

(IC)

in welchen

- $R^2$ und $R^{2'}$ gegebenenfalls voneinander verschieden sind und eine Gruppe mit der Formel

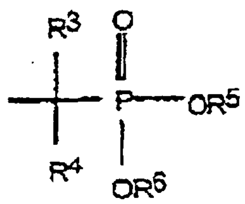

bedeuten, in welcher
$R^3$ und $R^4$ gegebenenfalls voneinander verschieden sind und ein Halogenatom und die $-NO_2-$, $-SO_3R-$, -NCO-, CN-, R-, -OR-, -SR-, $-NR_2-$ , -COOR-, $O_2CR-$, $-CONR_2-$, $-NCOR_2$und $C_nF_{(2n+1)}$-Gruppe, mit n 1 bis 20 und vorzugsweise gleich 1, bedeueten,
in welchen die Gruppen R gegebenenfalls voneinander verschieden sind und H oder eine Gruppe, die ausgewählt ist aus:

- Alkyl,
- Alkenyl,
- Alkinyl,
- Cycloalkenyl,
- Cycloalkinyl,
- Aryl, gegebenenfalls mit einem gegebenenfalls aromatischen Heterocyclus kondensiert,
- Alkaryl,
- Aralkyl und
- Heteroaryl,
  die gegebenenfalls durch eine oder mehrere gegebenenfalls voneinander verschiedene Gruppen substituiert, die ausgewählt sind aus Halogen, =O, =S, OH, Alkoxy, SH, Thioalkoxy, $NH_2$, Mono- oder Dialkylamino, CN, COOH, Ester, Amid und $C_nF_{2n+1}$, und/oder gegebenenfalls durch ein oder mehrere Atome unterbrochen ist, die aus 0, S, N und P ausgewählt sind,
- oder eine heterocyclische Gruppe, die gegebenenfalls durch eine oder mehrere Gruppen wie zuvor definiert substituiert ist, bedeuten, oder

  • $R^3$ und $R^4$ zusammen mit dem Kohlenstoffatom, an welches sie gebunden sind, eine =O- und =S-Gruppe oder einen Kohlenwasserstoff- bzw. Heterocyclus bilden,
  • $R^5$ und $R^6$ gegebenenfalls voneinander verschieden sind und eine wie weiter oben für R definierte Gruppe bedeuten oder
  • $R^5$ oder $R^6$ zusammen eine $C_2$- bis $C_4$-Kohlenwasserstoffkette bilden, die gegebenenfalls durch ein Heteroatom unterbrochen ist, das aus O, S und N ausgewählt ist,

- $R^1$ und $R^{1'}$ gegebenenfalls voneinander verschieden sind und eine wie zuvor für $R^3$ oder $R^4$ definierte Gruppe bedeuten und
- p eine ganze Zahl von 2 bis 10 bedeutet,

für die kontrollierte radikalische Polymerisation von ethylenisch ungesättigten Monomeren.

**26.** Verfahren zur Herstellung von Verbindungen mit der allgemeinen Formel IA nach Anspruch 18, **dadurch gekennzeichnet, dass** es die Stufen:

a) Umsetzen einer Carbonylverbindung mit der allgemeinen Formel II:

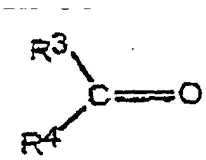

(II)

,

wobei $R^3$ und $R^4$ wie weiter oben definiert sind, mit einem Phosphit mit der allgemeinen Formel III:

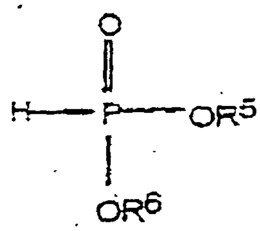

(III)

wobei $R^5$ und $R^6$ wie weiter oben definiert sind, um eine Verbindung mit der allgemeinen Formel IV:

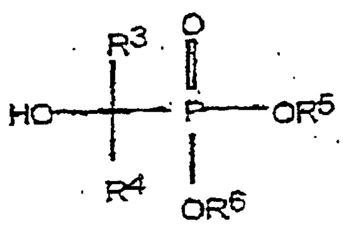

(IV)

wobei $R^3$, $R^4$, $R^5$ und $R^6$ wie weiter oben definiert sind, zu bilden,

b) Umsetzen der Verbindung mit der Formel IV mit Kohlendisulfid, $CS_2$, in Gegenwart eines Metallalkoholats, um ein Xanthat mit der Formel V

$$R^2O(C=S)S^-,M^+ \qquad (V)$$

in welcher $R^2$ wie weiter oben definiert ist und $M^+$ ein Kation, insbesondere ein Alkalimetallkation, bedeutet, zu erhalten, und

c) Umsetzen der Verbindung mit der Formel V mit einer Verbindung mit der Formel VI

$$R^1X \qquad (VI)$$

in welcher $R^1$ wie weiter oben definiert ist und X ein Halogenatom bedeutet, um eine Verbindung mit der Formel (IA) wie in Anspruch 18 definiert zu erhalten,

umfasst.

## Claims

1. Process for the preparation of polymers, **characterised in that** the following are brought into contact:

- at least one ethylenically unsaturated monomer,
- at least one source of free radicals, and
- at least one compound of general formula (IA), (IB) or (IC):

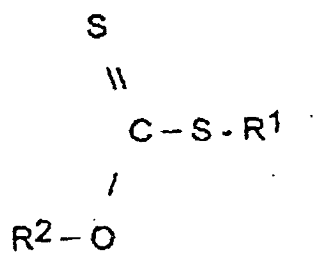

(IA)

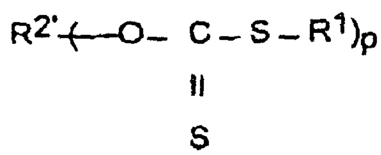

(IB)

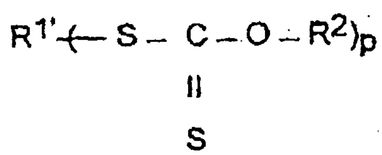

(IC)

wherein:
$R^2$ and $R^{2'}$, which may be identical or different, denote a group of formula:

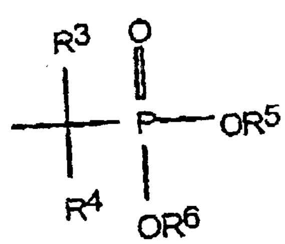

wherein
$R^3$ and $R^4$, which may be identical or different, are selected from among a halogen $-NO_2$, $-SO_3R$, -NCO, -CN, -R, -OR, -SR, $NR_2$, -COOR, $O_2CR$, $-CONR_2$, $-NCOR_2$ or $C_nF_{(2n+1)}$ group where n is between 1 and 20, preferably equal to 1,

wherein the groups R which may be identical or different represent H or a group selected from among:

- alkyl,
- alkenyl,
- alkynyl,
- cycloalkenyl,
- cycloalkynyl,
- aryl, optionally condensed with an aromatic or non-aromatic heterocycle,
- alkaryl,
- aralkyl,
- heteroaryl,

optionally substituted by one or more identical or different groups selected from among halogen, =O, =S, OH, alkoxy, SH, thioalkoxy, $NH_2$, mono- or dialkylamino, CN, COOH, ester, amide, $C_nF_{(2n+1)}$, and/or optionally interrupted by one or more atoms selected from among O, S, N, P,

or a heterocyclic group optionally substituted by one or more groups as hereinbefore defined

- or $R^3$ and $R^4$ together with the carbon atom to which they are attached represent a group =O, =S or a hydrocarbon ring or a heterocycle,
- $R^5$ and $R^6$, which may be identical or different, represent a group as hereinbefore defined for R
- or $R^5$ and $R^6$ together form a $C_{2-4}$ hydrocarbon chain optionally interrupted by a heteroatom selected from among O, S and N,

  - $R^1$ and $R^{1'}$ which may be identical or different represent a group as hereinbefore defined by $R^3$ or $R^4$,
  - p denotes an integer from 2 to 10.

2. Process according to claim 1, **characterised in that** $R^3$ denotes an electron-attracting group.

3. Process according to one of the preceding claims, **characterised in that** $R^3$ denotes an alkyl group substituted by at least one fluorine, chlorine and/or bromine atom, or a cyano group.

4. Process according to the preceding claim, **characterised in that** $R^4$ denotes a hydrogen atom.

5. Process according to claim 3, **characterised in that** $R^3$ is selected from among the following groups:

- $CF_3$,
- $CF_2CF_3$, and
- $C_6F_{13}$.

6. Process according to one of the preceding claims, **characterised in that** $R^1$ is selected from among the groups:

- $CH(CH_3)(CO_2Et)$
- $CH(CH_3)(C_6H_5)$
- $CH(CO_2Et)_2$
- $C(CH_3)(CO_2Et)(S\text{-}C_6H_5)$
- $C(CH_3)_2(C_6H_5)$, and

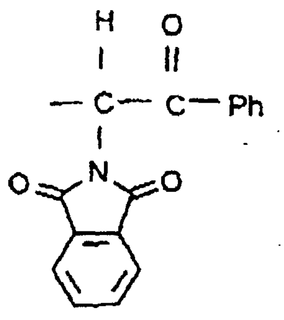

**7.** Process according to any one of the preceding claims, **characterised in that** the polymerisation uses a compound of formula (IA).

**8.** Process according to the preceding claim, **characterised in that** the compound of formula (IA) is selected from among:

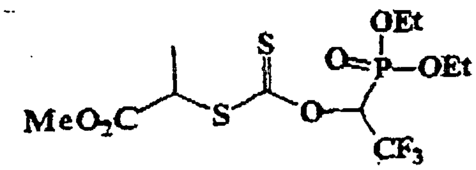

(IAa)

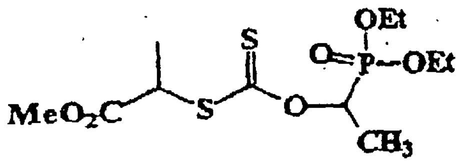

(IAb)

**9.** Process according to any one of the preceding claims, **characterised in that** the ethylenically unsaturated monomer is selected from among:

styrene or its derivatives, butadiene, chloroprene, the (meth)acrylic esters and vinyl nitriles.

**10.** Process according to any one of the preceding claims, **characterised in that** the ethylenically unsaturated monomer is selected from among:

the vinyl esters of carboxylic acid such as vinyl acetate and vinyl propionate.

**11.** Polymer composition which may be obtained by the process comprising bringing into contact an ethylenically unsaturated monomer, a source of free radicals and a compound of formula (IA), (IB) or (IC) as defined in claims 1 to 6.

**12.** Polymer composition according to the preceding claim, **characterised in that** it has a polydispersity index of at most 2 and preferably at most 1.5.

**13.** Composition predominantly comprising a polymer of general formula (IIIa):

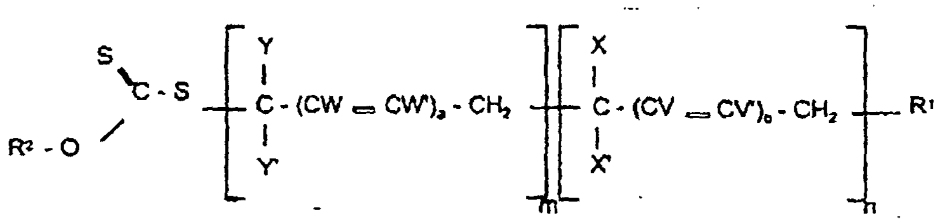

(IIIA)

wherein:

- $R^1$ and $R^2$ are as defined in claim 1;
- V, V', W and W', which may be identical or different, denote H, an alkyl group or a halogen;
- X, X', Y and Y', which may be identical or different, denote H, a halogen or an $R^7$, $OR^7$, $O_2COR^7$, NHCOH, OH, $NH_2$, $NHR^7$, $NR_2$, $R_2N^+O^-$, $NHCOR^7$, $CO_2H$, $CO_2R^7$, CN or $CONH_2$ group, wherein $R^7$ is selected from among the R groups as defined in claim 1;
- a and b, which may be identical or different, denote 0 or 1;

- m and n, which may be identical or different, are greater than or equal to 1, and when one or other of them is greater than 1, the repeat units are identical or different.

**14.** Polymer composition according to claim 13, **characterised in that** the polymer of general formula (IIIa) is a homopolymer, the repeat motifs being identical.

**15.** Polymer composition according to claim 13, **characterised in that** the polymer of general formula (IIIa) is a sequenced polymer, the repeat units being different.

**16.** Process for preparing a composition comprising a multiblock polymer according to claim 15, **characterised in that** the process according to one of claims 1 to 10 is repeated at least once using:

- different monomers from those used the previous time; and
- instead of the precursor compound of formula (IA), (IB) or (IC), the sequenced polymer obtained from the previous time.

**17.** Sequenced polymer according to claim 15, **characterised in that** it has at least two sequenced polymers selected from among the following combinations:

- polystyrene/methyl polyacrylate,
- polystyrene/ethyl polyacrylate,
- polystyrene/tert. butyl polyacrylate,
- ethyl polyacrylate/vinyl polyacetate,
- butyl polyacrylate/vinyl polyacetate,
- tert. butyl polyacrylate/vinyl polyacetate.

**18.** Compounds of general formulae Ia to Ic:

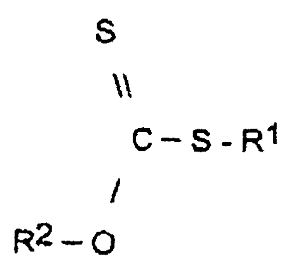

(IA)

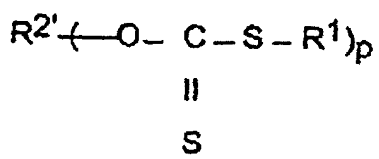

(IB)

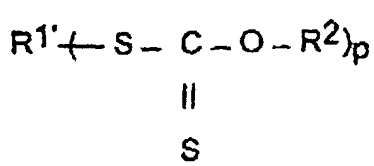

(IC)

wherein

$R^2$ and $R^{2'}$, which may be identical or different, denote a group of formula:

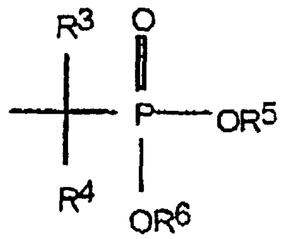

wherein

- $R^3$ and $R^4$, which may be identical or different, denote a halogen, $-NO_2$, $-SO_3R$, -NCO, CN, R, -OR, -SR, $-NR_2$, -COOR, $O_2CR$, $-CONR_2$, $-NCOR_2$ or $C_nF_{(2n+1)}$ group where n is between 1 and 20, preferably equal to 1,
  wherein the R groups which may be identical or different represent H or a group selected from among:

  - alkyl,
  - alkenyl,
  - alkynyl,
  - cycloalkenyl,
  - cycloalkynyl,
  - aryl, optionally condensed with an aromatic or non-aromatic heterocycle,
  - alkaryl,
  - aralkyl,
  - heteroaryl,

  optionally substituted by one or more identical or different groups selected from among halogen, =O, =S, OH, alkoxy, SH, $NH_2$, mono- or dialkylamino, CN, COOH, ester, amide, $CF_3$, and/or optionally interrupted by one or more atoms selected from among O, S, N, P,
  or a heterocyclic group optionally substituted by one or more groups as hereinbefore defined

- or $R^3$ and $R^4$ together with the carbon atom to which they are attached represent a group =O, =S or a hydrocarbon ring or a heterocycle,
- $R^5$ and $R^6$ which may be identical or different represent a group as hereinbefore defined for R
- or $R^5$ and $R^6$ together form a $C_{2-4}$ hydrocarbon chain optionally interrupted by a heteroatom selected from among O, S and N,

  - $R^1$ and $R^{1'}$ which may be identical or different represent a group as hereinbefore defined by $R^3$ or $R^4$,
  - p denotes an integer from 2 to 10,

with the proviso that when $R_1$ denotes an alkyl group and $R_3$ and $R_4$ denote a group R as hereinbefore defined, R is necessarily substituted by one or more identical or different groups selected from among halogen, =O, =S, OH, alkoxy, SH, thioalkoxy, $NH_2$, mono- or dialkylamino, CN, COOH, ester, amide, $C_nF_{(2n+1)}$, and/or interrupted by one or more atoms selected from among O, S, N, P.

**19.** Compounds according to claim 18, **characterised in that** $R^3$ denotes an electron-attracting group.

**20.** Compounds according to claim 18, **characterised in that** $R^3$ denotes an alkyl group substituted by at least one fluorine, chlorine and/or bromine atom, or a cyano group.

**21.** Compounds according to claim 18, **characterised in that** $R^4$ denotes a hydrogen atom.

**22.** Compounds according to claim 18, **characterised in that** $R^3$ is selected from among the following groups:

- $CF_3$,
- $CF_2CF_3$, and
- $C_6F_{13}$.

**23.** Compounds according to claim 18, **characterised in that** $R^1$ is selected from among the groups:

- $CH(CH_3)(CO_2Et)$
- $CH(CH_3)(C_6H_5)$
- $CH(CO_2Et)_2$
- $C(CH_3)(CO_2Et)(S-C_6H_5)$
- $C(CH_3)_2(C_6H_5)$, and

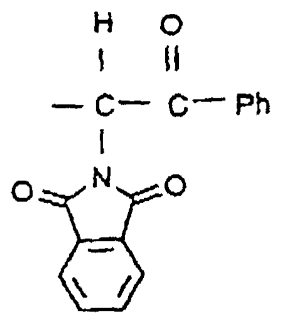

**24.** Compounds according to claim 18, **characterised in that** the compound of formula (IA) is selected from among:

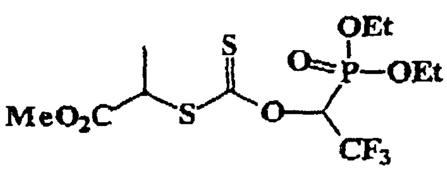

(IAa)

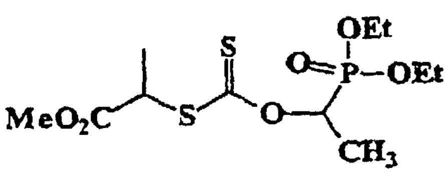

(IAb)

**25.** Use of compounds of general formulae IA to IC:

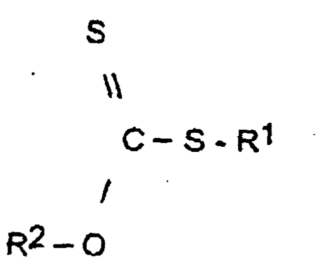

(IA)

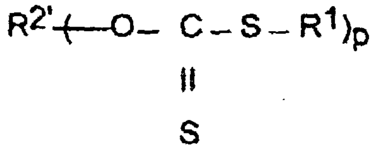 (IB)

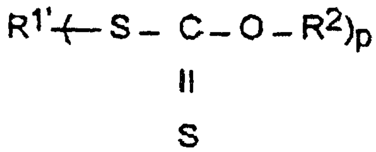 (IC)

wherein $R^2$ and $R^{2'}$, which may be identical or different, denote a group of formula:

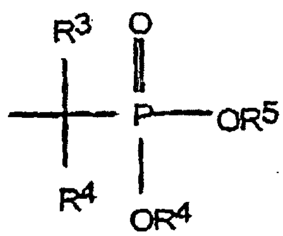

wherein

$R^3$ and $R^4$, which may be identical or different, denote a halogen, $-NO_2$, $-SO_3R$, -NCO, CN, R, -OR, -SR, $-NR_2$, -COOR, $O_2CR$, $-CONR_2$, $-NCOR_2$ or $C_nF_{(2n+1)}$ group where n is between 1 and 20, preferably equal to 1,

wherein the R groups which may be identical or different represent H or a group selected from among:

- alkyl,
- alkenyl,
- alkynyl,
- cycloalkenyl,
- cycloalkynyl,
- aryl, optionally condensed with an aromatic or non-aromatic heterocycle,
- alkaryl,
- aralkyl,
- heteroaryl,

optionally substituted by one or more identical or different groups selected from among halogen, =O, =S, OH, alkoxy, SH, thioalkoxy, $NH_2$, mono- or dialkylamino, CN, COOH, ester, amide, $C_nF_{(2n+1)}$, and/or optionally interrupted by one or more atoms selected from among O, S, N, P,

or a heterocyclic group optionally substituted by one or more groups as hereinbefore defined

- or $R^3$ and $R^4$ together with the carbon atom to which they are attached represent a group =O, =S or a hydrocarbon ring or a heterocycle,
- $R^5$ and $R^6$ which may be identical or different represent a group as hereinbefore defined for R
- or $R^5$ and $R^6$ together form a $C_{2-4}$ hydrocarbon chain optionally interrupted by a heteroatom selected from among O, S and N,

  - $R^1$ and $R^{1'}$ which may be identical or different represent a group as hereinbefore defined by $R^3$ or $R^4$,
  - p denotes an integer from 2 to 10,

for controlled radical polymerisation of ethylenically unsaturated monomers.

**26.** Process for preparing compounds of general formula IA according to claim 18, **characterised in that** it comprises the following steps:

a) reacting a carbonyl compound of general formula II:

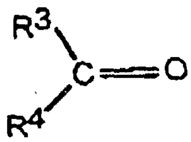

(II)

wherein $R^3$ and $R^4$ are as hereinbefore defined, with a phosphite of general formula III:

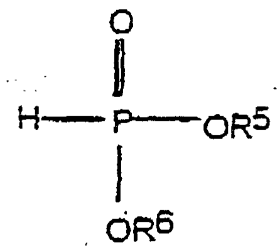

(III)

where $R^5$ and $R^6$ are as hereinbefore defined,
to form a compound of general formula IV:

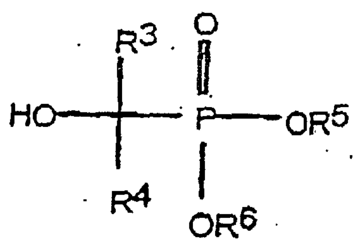

(IV)

wherein $R^3$, $R^4$, $R^5$ and $R^6$ are as hereinbefore defined,

b) reacting the compound of formula IV with carbon disulphide $CS_2$ in the presence of a metal alkoxide to yield a xanthate of formula V:

$$R^2O\ (C{=}S)\text{-}S\text{-},\ M^+ \qquad (V)$$

wherein $R^2$ is as hereinbefore defined and $M^+$ denotes a cation, notably an alkali metal cation;

c) reacting the compound of formula V with a compound of formula VI:

$$R^1X \qquad (VI)$$

wherein $R^1$ is as hereinbefore defined and X denotes a halogen atom, to yield the compound of formula (IA) as defined in claim 18.